(19)

Europäisches Patentamt
European Patent Office
Office européen des brevets

(11) **EP 1 775 528 A1**

(12) **EUROPEAN PATENT APPLICATION**
published in accordance with Art. 158(3) EPC

(43) Date of publication:
**18.04.2007 Bulletin 2007/16**

(51) Int Cl.:
**F25B 1/00** (2006.01)

(21) Application number: **05768646.1**

(22) Date of filing: **02.08.2005**

(86) International application number:
**PCT/JP2005/014122**

(87) International publication number:
**WO 2006/013861 (09.02.2006 Gazette 2006/06)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.08.2004 JP 2004225997**
**28.12.2004 JP 2004379512**

(71) Applicant: **DAIKIN INDUSTRIES, LTD.**
**Kita-ku, Osaka 530-8323 (JP)**

(72) Inventors:
• **TAKEGAMI, Masaaki,**
**Sakai Plant Daikin Ind. Ltd.**
**Sakai-shi, Osaka 591-8511 (JP)**

• **TANIMOTO, Kenji,**
**Sakai Plant, Daikin Ind. Ltd.**
**Sakai-shi, Osaka 591-8511 (JP)**
• **SAKAE, Satoru,**
**Sakai Plant, Daikin Ind. Ltd.**
**Sakai-shi, Osaka 591-8511 (JP)**
• **SHINOHARA, Iwao,**
**Sakai Plant, Daikin Ind. Ltd.**
**Sakai-shi, Osaka 591-8511 (JP)**
• **KONDO, Azuma,**
**Sakai Plant, Daikin Ind. Ltd.**
**Sakai-shi, Osaka 591-8511 (JP)**

(74) Representative: **HOFFMANN EITLE**
**Patent- und Rechtsanwälte**
**Arabellastrasse 4**
**81925 München (DE)**

(54) **REFRIGERATION UNIT**

(57)    An outside air temperature sensor (231) for detecting the temperature of outside air, and a control means (240) for controlling the operating capacity of a supercool compressor (221) are provided. The control means (240) controls the operation of the supercool compressor (221) based on the state of refrigerant of a refrigerant circuit (20) flowing through a supercool heat exchanger (210) and the temperature of outside air detected by the outside air temperature sensor (231).

FIG. 2

EP 1 775 528 A1

## Description

## TECHNICAL FIELD

The present invention relates to a refrigerating apparatus including a supercool unit adapted to supercool refrigerant which is delivered from one equipment on the heat source side to another on the utilization side.

## BACKGROUND ART

A conventional type of refrigerating apparatus has been known in the art which includes a first refrigerant circuit having a supercool heat exchanger, and a second refrigerant circuit having a utilization side heat exchanger and a heat source side compressor. In an attempt to enhance the cooling capacity of the refrigerating apparatus a second refrigerant in the second refrigerant circuit is supercooled through the supercool heat exchanger. One such refrigerating apparatus is disclosed in, for example, JP H10-185333A.

This refrigerating apparatus which is in the form of an air conditioning system is provided with an outdoor unit, an indoor unit, and a supercool unit. More specifically, the supercool unit is disposed along a liquid side interconnecting pipe line by which the outdoor unit and the indoor unit are fluidly connected together. The supercool unit is provided with a first refrigerant circuit as a cooling fluid circuit. The supercool unit is configured, such that it causes a first refrigerant to circulate in the first refrigerant circuit to thereby effect a refrigeration cycle, and cools a second refrigerant of the air conditioning system fed from the liquid side interconnecting pipe line in the supercool heat exchanger of the first refrigerant circuit. And the supercool unit cools liquid refrigerant which is delivered from the outdoor unit to the indoor unit of the air conditioning system and reduces the enthalpy of liquid refrigerant which is delivered to the indoor unit, thereby improving the cooling capacity.

As described above, the supercool unit is employed to assist the refrigerating apparatus (air conditioning system) in enhancing the cooling capacity thereof. For this reason, the supercool unit is never operated alone during downtime of the refrigerating apparatus. In addition, the supercool unit is not placed in operation when the refrigerating apparatus operates as a heat pump, e.g. when the air conditioning system is in the heating operating mode. Whether or not the supercool unit is placed in operation is decided based on the operational status of the refrigerating apparatus in which the supercool unit is mounted, the temperature of outside air, and other parameter.

Therefore, in the above air conditioning system, a control part of the supercool unit is connected to a control part of the air conditioning system to thereby form a single control system. The control part of the supercool unit receives a signal indicative of the operational status of the air conditioning system from the control part of the air conditioning system. And, the operation of the supercool unit is controlled based on the incoming signal from the control part of the air conditioning system.

PROBLEMS THAT THE INVENTION INTENDS TO SOLVE

Incidentally, when the load increases due to a rise in the temperature of outside air or the like, it is usual to increase the operating capacity of a compressor of the second refrigerant circuit to thereby secure the cooling capacity of the aforesaid conventional air conditioning system (refrigerating apparatus).

However, if the amount of refrigerant circulation is simply increased in the second refrigerant circuit in which the difference between the high pressure and the low pressure of refrigeration cycle is large, this may result in increasing the input power to the compressor and therefore lowering the coefficient of performance. As a result the problem arises that the overall power consumption of the apparatus increases significantly.

In addition, if there is a limit to the contract demand, the demand for setting a limit to the total of the power consumption of the first refrigerant circuit and the power consumption of the second refrigerant circuit is great, in particular in summer because summer electric use usually becomes excessive.

With these problems in mind, the present invention was devised.

Accordingly, an object of the present invention is to control the overall power consumption of the apparatus. To this end, the balance in operating capacity between the heat source side circuit and the supercool circuit is controlled to thereby improve the efficiency of operation of the entire refrigerating apparatus.

## DISCLOSURE OF THE INVENTION

The present invention provides the following solutions to the problems.

More specifically, a first problem solving means of the invention provides a refrigerating apparatus comprising: a refrigerant circuit **(20)** which includes a utilization side heat exchanger **(101, 111, 131)** and a heat source side compressor **(41, 42, 43)** and through which refrigerant is circulated to effect a vapor compression refrigeration cycle; and a cooling fluid circuit **(220)** which includes a supercool heat exchanger **(210)** and a pump mechanism **(221)** which delivers cooling fluid to the supercool heat exchanger **(210),** wherein refrigerant which is supplied to the utilization side heat exchanger **(101, 111, 131)** is supercooled by cooling fluid in the supercool heat exchanger **(210).**

The refrigerating apparatus of the first problem solving means further comprises a control means **(240)** which reduces the power consumption of the pump mechanism **(221)** either based on the state of refrigerant of the refrigerant circuit **(20)** flowing through the supercool heat exchanger **(210)** or based on the state of cooling fluid of the cooling fluid circuit **(220)** and the temperature of outside air.

In the above problem solving means, in the cooling fluid circuit **(220)** cooling fluid (e.g. refrigerant, water et cetera) for supercooling of refrigerant of the refrigerant circuit **(20)** is supplied by the pump mechanism **(221)** to the supercool heat exchanger **(210)**. In the supercool heat exchanger **(210),** the refrigerant of the refrigerant circuit **(20)** exchanges heat with the cooling fluid. And in the supercool heat exchanger **(210),** the cooling fluid absorbs heat from the refrigerant of the refrigerant circuit **(20),** and the refrigerant of the refrigerant circuit **(20)** is cooled.

In this refrigerating apparatus (10), the control means (240) reduces the power consumption of the pump mechanism (221) either based on the state of refrigerant of the refrigerant circuit (20) flowing through the supercool heat exchanger (210) or based on the state of cooling fluid of the cooing fluid circuit (220) and the temperature of outside air. In other words, only based on the information obtained within the cooling fluid circuit (220), the operation of the pump mechanism (221) is controlled. This allows the control means (240) to reduce the power consumption of the pump mechanism (221) without having to receive any signal indicative of the operational status of the refrigerant circuit (20).

A second problem solving means of the invention provides a refrigerating apparatus according to the first problem solving means in which the control means (240) is configured to estimate power consumption relating to the refrigerant circuit (20) either based on the state of refrigerant of the refrigerant circuit (20) flowing through the supercool heat exchanger (210) or based on the state of cooling fluid of the cooling fluid circuit (220) and the temperature of outside air, whereby the power consumption of the pump mechanism (221) is reduced.

In the above problem solving means, the operational status of the refrigerant circuit (20) is approximately predicted by the control means (240) either based on the state of refrigerant of the refrigerant circuit (20) flowing through the supercool heat exchanger (210) or based on the state of cooling fluid of the cooling fluid circuit (220) and the temperature of outside air, and the power consumption of the refrigerant circuit (20) is estimated. And the control means (240) reduces the power consumption of the pump mechanism (221) in order that the total of the estimated power consumption of the refrigerant circuit (20) and the power consumption of the pump mechanism (221) of the cooling fluid circuit (220) may not exceed a predetermined value.

A third problem solving means of the invention provides a refrigerating apparatus according to the first problem solving means in which the cooling fluid circuit is a supercool refrigerant circuit (220) which includes a supercool compressor (221) as a pump mechanism and a heat source side heat exchanger **(222)** and through which supercool refrigerant as cooling fluid is circulated to effect a vapor compression refrigeration cycle.

And the control means **(240)** is configured to reduce the power consumption of the supercool compressor **(221)** by lowering the operating frequency of the supercool compressor **(221)** either based on the state of refrigerant of the refrigerant circuit **(20)** flowing through the supercool heat exchanger **(210)** or based on the state of supercool refrigerant of the supercool refrigerant circuit **(220)** and the temperature of outside air.

In the above problem solving means, in the supercool refrigerant circuit **(220)** supercool refrigerant expelled out of the supercool compressor **(221)** exchanges heat in the heat source side heat exchanger **(222)** with for example air, then exchanges heat in the supercool heat exchanger **(210)** with the refrigerant of the refrigerant circuit (20), and is returned again into the supercool compressor **(221).** This circulation is repeatedly carried out. In the supercool heat exchanger **(210),** the supercool refrigerant absorbs heat from the refrigerant of the refrigerant circuit **(20) and** evaporates, whereby the refrigerant of the refrigerant circuit **(20)** is cooled.

Without receiving any operational status indicating signal from the refrigerant circuit's **(20)** side, the control means **(240)** lowers the operating frequency of the supercool compressor **(221)** either based on the state of refrigerant of the refrigerant circuit **(20)** flowing through the supercool heat exchanger **(210)** or based on the state of supercool refrigerant of the supercool refrigerant circuit **(220)** and the temperature of outside air, whereby the operating capacity of the supercool compressor **(221)** is reduced.

A fourth problem solving means of the invention provides a refrigerating apparatus according to the first problem solving means in which the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle.

And the control means **(240)** is configured to reduce the power consumption of the supercool compressor **(221)** by increasing the operating frequency of a fan **(230)** of the heat source side heat exchanger **(222)** either based on the state of refrigerant of the refrigerant circuit **(20)** flowing through the supercool heat exchanger **(210)** or based on the state of supercool refrigerant of the supercool refrigerant circuit **(220)** and the temperature of outside air.

In the above problem solving means, in the supercool refrigerant circuit **(220)** supercool refrigerant expelled out of the supercool compressor **(221)** exchanges heat in the heat source side heat exchanger **(222)** with air drawn in by the fan **(230)**, then exchanges heat in the supercool heat exchanger (210) with the refrigerant of the refrigerant circuit **(20),** and is returned again into the supercool compressor **(221)**. This circulation is repeatedly carried out.

And either based on the state of refrigerant of the refrigerant circuit **(20)** flowing through the supercool heat exchanger **(210)** or based on the state of supercool refrigerant of the supercool refrigerant circuit **(220**) and the temperature of outside air, the control means **(240)** increases the operating frequency of the fan **(230)** of the heat source side heat exchanger **(222)** to thereby increase the air volume thereof. In doing so, the operating capacity of the supercool compressor **(221)** remains unchanged. Consequently, the high pressure of supercool refrigerant in the supercool refrigerant circuit **(220)** is lowered, so that the compression load in the supercool compressor **(221)** decreases and the power consumption of the supercool compressor **(221)** is reduced. To sum up, the amount of compression work is reduced by lowering the discharge pressure.

A fifth problem solving means of the invention provides a refrigerating apparatus according to the first or second problem solving means in which the state of refrigerant of the refrigerant circuit **(20)** flowing through the supercool heat exchanger **(210)** is the degree of supercooling of refrigerant of the refrigerant circuit **(20)** in the supercool heat **exchanger (210).**

In the above problem solving means, the difference between the temperature of refrigerant of the refrigerant circuit **(20)** prior to supercooling in the supercool heat exchanger **(210)** and the temperature of refrigerant of the refrigerant circuit **(20)** after supercooling is detected as a degree of supercooling. And, the state of refrigerant of the refrigerant circuit **(20)** flowing through the supercool heat exchanger **(210)** is estimated from the detected degree of supercooling.

More specifically, from the fact that the refrigerant of the refrigerant circuit **(20)** is sufficiently cooled in the supercool heat exchanger **(210)** if the degree of supercooling is high, it can be decided that the flow rate of refrigerant of the refrigerant circuit **(20)** flowing into the supercool heat exchanger **(210)** from the refrigerant circuit **(20)** is low. This allows the control means **(240)** to make an estimate that power consumption relating to the refrigerant circuit **(20)** is small. At this time, the power consumption of the pump mechanism **(221)** is not reduced. On the other hand, from the fact that the refrigerant of the refrigerant circuit **(20)** is not sufficiently cooled in the supercool heat exchanger **(210)** if the degree of supercooling is low, it can be decided that the flow rate of refrigerant of the refrigerant circuit **(20)** flowing into the supercool heat exchanger **(210)** from the refrigerant circuit **(20)** is high. This allows the control means **(240)** to make an estimate that power consumption relating to the refrigerant circuit **(20)** is large. At this time, the power consumption of the pump mechanism **(221)** is reduced by the control means **(240)** so that the total of the power consumption of the pump mechanism **(221)** and the power consumption of the refrigerant circuit **(20)** is controlled so as to fall below a predetermined value.

A sixth problem solving means of the invention provides a refrigerating apparatus according to the first or second problem solving means in which the state of refrigerant of the refrigerant circuit **(20)** flowing through the supercool heat exchanger **(210)** is the flow rate of refrigerant of the refrigerant circuit **(20)** flowing through the supercool heat **exchanger (210).**

In the above problem solving means, the flow rate of refrigerant flowing through the supercool heat exchanger **(210)** is directly detected. The state of refrigerant of the refrigerant circuit **(20)** flowing through the supercool heat exchanger **(210)** is estimated from the detected refrigerant flow rate. And the control means **(240)** reduces the power consumption of the pump mechanism **(221)** based on the detected refrigerant flow rate and the temperature of outside air so that the total of the power consumption of the pump mechanism **(221)** and the power consumption of the refrigerant circuit (20) is controlled so as to fall below a predetermined value.

A seventh problem solving means of the invention provides a refrigerating apparatus according to the first or second problem solving means in which the state of cooling fluid of the cooling fluid circuit **(220)** is the difference between temperatures of cooling fluid prior to and after supercooling of refrigerant of the refrigerant circuit **(20)** in the supercool heat exchanger **(210).**

In the above problem solving means, the difference between temperatures of cooling fluid prior to and after supercooling in the cooling fluid circuit **(220)** is detected. The state of refrigerant of the refrigerant circuit **(20)** flowing through the supercool heat exchanger **(210)** is estimated from the detected cooling fluid temperature difference.

More specifically, from the fact that the refrigerant of the refrigerant circuit **(20)** is sufficiently cooled in the supercool heat exchanger **(210)** if the cooling fluid temperature difference is great, it can be decided that the flow rate of refrigerant of the refrigerant circuit **(20)** flowing through the supercool heat exchanger **(210)** is low. Accordingly, the control means **(240)** makes an estimate that power consumption relating to the refrigerant circuit **(20)** is small, and the power consumption of the pump mechanism **(221)** is not reduced. On the other hand, from the fact that the refrigerant of the refrigerant circuit **(20)** is not sufficiently cooled in the supercool heat exchanger **(210)** if the cooling fluid temperature difference is small, it can be decided that the flow rate of refrigerant of the refrigerant circuit **(20)** flowing through the supercool heat exchanger **(210)** is high. Accordingly, the control means **(240)** makes an estimate that power consumption relating to the refrigerant circuit **(20)** is large, and the power consumption of the pump mechanism **(221)** is reduced so that the total of the power consumption of the pump mechanism **(221)** and the power consumption of the refrigerant circuit **(20)** is controlled so as to fall below a predetermined value.

An eighth problem solving means of the invention provides a refrigerating apparatus according to the first or second problem solving means in which the state of cooling fluid of the cooling fluid circuit **(220)** is the flow rate of cooling fluid flowing through the supercool heat

exchanger **(210).**

In the above problem solving means, the state of refrigerant of the refrigerant circuit (20) flowing through the supercool heat exchanger **(210)** is estimated from the flow rate of cooling fluid flowing through the supercool heat exchanger **(210).** More specifically, if the flow rate of cooling fluid is low, it can be decided that the flow rate of refrigerant flowing through the supercool heat exchanger **(210)** is low as well. In this case, the control means **(240)** makes an estimate that power consumption relating to the refrigerant circuit **(20)** is small, and the power consumption of the pump mechanism **(221)** is not reduced. On the other hand, if the flow rate of cooling fluid is high, it can be decided that the flow rate of refrigerant flowing through the supercool heat exchanger **(210)** is likewise high. In this case, the control means **(240)** makes an estimate that power consumption relating to the refrigerant circuit (20) is large, and the power consumption of the pump mechanism **(221)** is reduced so that the total of the power consumption of the pump mechanism **(221)** and the power consumption of the refrigerant circuit (20) is controlled so as to fall below a predetermined value.

A ninth problem solving means of the invention provides a refrigerating apparatus according to the first or second problem solving means in which the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle. And the state of supercool refrigerant of the supercool refrigerant circuit **(220)** is the high pressure of supercool refrigerant in the supercool refrigerant circuit **(220).**

In the above problem solving means, the state of refrigerant of the refrigerant circuit **(20)** flowing through the supercool heat exchanger **(210)** is estimated from the high pressure of supercool refrigerant. In other words, the amount of heat exchange in the supercool heat exchanger **(210)** decreases if the high pressure of supercool refrigerant is low, and it is decided that the flow rate of refrigerant of the refrigerant circuit **(20)** is low and it is estimated that power consumption relating to the refrigerant circuit **(20)** is small. On the other hand, when the high pressure of supercool refrigerant is high, the amount of heat exchange in the supercool heat exchanger **(210)** increases. Then the controller **(240)** makes a decision that the flow rate of refrigerant of the refrigerant circuit **(20)** is high, and it is estimated that power consumption relating to the refrigerant circuit **(20)** is large. Accordingly, the power consumption of the supercool compressor **(221)** is reduced.

A tenth problem solving means of the invention provides a refrigerating apparatus according to the first or second problem solving means in which the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle. And the state of supercool refrigerant of the supercool refrigerant circuit **(220)** is the pressure difference between the high pressure and the low pressure of supercool refrigerant in the supercool refrigerant circuit **(220).**

In the above problem solving means, the state of refrigerant of the refrigerant circuit **(20)** flowing through the supercool heat exchanger **(210)** is estimated from the pressure difference between the high pressure and the low pressure of supercool refrigerant. More specifically, when the pressure difference is small, it is decided that the high pressure is lower than normal because the low pressure is held substantially constant by the expansion valve or the like, and it is decided that the flow rate of refrigerant of the refrigerant circuit (20) flowing through the supercool heat exchanger **(210)** is low. Accordingly, it is estimated that power consumption with regard the refrigerant circuit **(20)** is small. On the other hand, when the pressure difference is large, it is decided that the high pressure is higher than normal, and it is decided that the flow rate of refrigerant of the refrigerant circuit **(20)** flowing through the supercool heat exchanger **(210)** is high. And, it is estimated that the power consumption relating to the refrigerant circuit **(20)** is large, and the power consumption of the supercool compressor **(221)** is reduced.

An eleventh problem solving means of the invention provides a refrigerating apparatus comprising: a refrigerant circuit **(20)** which includes a utilization side heat exchanger **(101, 111, 131)** and a heat source side compressor **(41, 42, 43)** and through which refrigerant is circulated to effect a vapor compression refrigeration cycle; and a cooling fluid circuit **(220)** which includes a supercool heat exchanger (210) and a pump mechanism **(221)** which delivers cooling fluid to the supercool heat exchanger **(210),** wherein refrigerant which is supplied to the utilization side heat exchanger **(101, 111, 131)** is supercooled by cooling fluid in the supercool heat exchanger **(210).**

The refrigerant apparatus further comprises a control means **(240)** which controls power consumption relating to the refrigerant circuit **(20)** and power consumption relating to the cooling fluid circuit **(220).** In addition, the control means **(240)** increases the power consumption of the cooling fluid circuit **(220)** in preference to the refrigerant circuit (20), when there is an increase in load.

In the above problem solving means, in the cooling fluid circuit **(220)** cooling fluid (e.g. refrigerant, water et cetera) for supercooling of the refrigerant of the refrigerant circuit **(20)** is supplied by the pump mechanism **(221)** to the supercool heat exchanger **(210).** In the supercool heat exchanger **(210),** the refrigerant of the refrigerant circuit **(20)** exchanges heat with the cooling fluid. And in the supercool heat exchanger **(210),** the cooling fluid absorbs heat from the refrigerant of the refrigerant circuit **(20),** and the refrigerant of the refrigerant circuit **(20)** is cooled.

When the load increases in the refrigerating apparatus, the control means **(240)** exercises operational control so that the power consumption of the cooling fluid circuit **(220)** is increased in preference to the refrigerant circuit **(20).** For example, the operating capacity of the pump mechanism **(221)** is increased to thereby increase power consumption relating to the cooling fluid circuit **(220).** In other words, in the cooling fluid circuit **(220)** the amount of work of electrical equipment including the pump mechanism **(221)** et cetera is increased, thereby enhancing the cooling capacity. As a result of such arrangement, the cooling capacity of the supercool heat exchanger **(210)** is enhanced without having to increase the power consumption (i.e. the amount of work) of electric equipment including the heat source side compressor **(41, 42, 43)** et cetera in the refrigerant circuit **(20).** Therefore, even when the load of the refrigerating apparatus increases, the enthalpy of refrigerant of the refrigerant circuit (20) flowing towards the utilization side heat exchanger **(101, 111, 131)** is held low, thereby securing the cooling capacity in the utilization side heat exchanger **(101, 111, 131).**

A twelfth problem solving means of the invention provides a refrigerating apparatus according to the eleventh problem solving means in which the control means **(240)** controls power consumption relating to the cooling fluid circuit **(220)** so that the temperature of refrigerant at an outlet of the supercool heat exchanger **(210)** becomes a target value, and sets the target value based on the ambient condition of the supercool heat exchanger **(210)** so that the power consumption of the cooling fluid circuit **(220)** is preferentially increased when there is an increase in load.

In the above problem solving means, the control means **(240)** controls, based on the ambient condition of the supercool heat exchanger **(210),** e.g. the temperature of outside air, the flow rate of refrigerant of the refrigerant circuit (20) et cetera, the target value of the refrigerant outlet temperature of the supercool heat exchanger **(210).** In other words, the control means **(240)** grasps a load state of the refrigerating apparatus from the ambient condition of the supercool heat exchanger **(210)** and sets, based on the load state, a target value. Accordingly, when the load increases, the power consumption of the cooling fluid circuit **(220)** is increased according to the increased load in preference to the refrigerant circuit **(20).**

A thirteenth problem solving means of the invention provides a refrigerating apparatus according to the eleventh problem solving means in which the control means **(240)** is configured to increase the power consumption of the pump mechanism **(221)** to thereby preferentially increase the power consumption of the cooling fluid circuit **(220).**

In the above-described problem solving means, the control means **(240)** increases the operating capacity of the pump mechanism **(221)** to thereby increase the power consumption thereof. Stated another way, in the cold fluid circuit **(220)** the rate of feeding cooling fluid to the supercool heat exchanger **(210)** is increased, thereby enhancing the cooling capacity of the supercool heat exchanger **(210).**

A fourteenth problem solving means of the invention provides a refrigerating apparatus according to the thirteenth problem solving means in which the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle. And the control means **(240)** is configured to increase the operating frequency of the supercool compressor **(221)** to thereby increase the power consumption of the supercool compressor **(221).**

In the above problem solving means, in the supercool refrigerant circuit **(220)** supercool refrigerant expelled out of the supercool compressor **(221)** exchanges heat in the heat source side heat exchanger **(222)** with for example air, then exchanges heat in the supercool heat exchanger **(210)** with the refrigerant of the refrigerant circuit **(20),** and is returned again into the supercool compressor **(221).** This circulation is repeatedly carried out. In the supercool heat exchanger **(210),** the supercool refrigerant absorbs heat from the refrigerant of the refrigerant circuit **(20)** and evaporates, whereby the refrigerant of the refrigerant circuit **(20)** is cooled.

In the refrigerating apparatus, when the load increases, the operating frequency of the supercool compressor **(221),** i.e. the operating capacity of the supercool compressor **(221),** is increased in order that the outlet refrigerant temperature of the supercool heat exchanger (210) may become a target value, thereby increasing the power consumption of the supercool compressor **(221).** In other words, in the supercool heat exchanger **(210),** the flow rate of supercool refrigerant increases, thereby enhancing the cooling capacity.

A fifteenth problem solving means of the invention provides a refrigerating apparatus according to the thirteenth problem solving means in which the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle. And the control means **(240)** is configured to increase the operating frequency of a fan **(230)** of the heat source side heat exchanger **(222)** to thereby preferentially increase the power consumption of the supercool refrigerant circuit **(220).**

In the above problem solving means, in the supercool refrigerant circuit **(220)** supercool refrigerant expelled out of the supercool compressor **(221)** exchanges heat in the heat source side heat exchanger **(222)** with air drawn in by the fan **(230),** then exchanges heat in the supercool heat exchanger **(210)** with the refrigerant of the refrigerant circuit **(20),** and is returned again into the supercool compressor **(221).** This circulation is repeatedly carried out.

In this refrigerating apparatus, when the load increases, the operating frequency of the fan **(230)** of the heat source side heat exchanger **(222)** is increased to thereby increase the power consumption of the fan **(230)**. In doing so, the operating capacity of the supercool compressor **(221)** remains unchanged. Here, if the operating frequency of the fan **(230)** is increased, the high pressure of supercool refrigerant in the supercool refrigerant circuit **(220)** decreases, and the volumetric efficiency of the supercool compressor **(221)** is improved. As a result, the flow rate of supercool refrigerant flowing through the supercool heat exchanger **(210)** increases. This enhances the cooling capacity of the supercool heat exchanger **(210)**. In other words, the amount of work of the fan **(230)** is increased to thereby gain the cooling capacity.

A sixteenth problem solving means of the invention provides a refrigerating apparatus according to the twelfth problem solving means in which the ambient condition of the supercool heat exchanger **(210)** is the temperature of outside air.

In the above problem solving means, the target value of the outlet refrigerant temperature of the supercool heat exchanger **(210)** is set based on the temperature of outside air. In other words, the control means **(240)** estimates, based on the outside air temperature, the load state of the refrigerating apparatus and makes a decision that the load has increased, whenever there is a rise in the outside air temperature.

A seventeenth problem solving means of the invention provides a refrigerating apparatus according to the twelfth problem solving means in which the ambient condition of the supercool heat exchanger **(210)** is the degree of supercooling of refrigerant of the refrigerant circuit **(20)** in the supercool heat exchanger **(210)**.

In the above problem solving means, the target value of the outlet refrigerant temperature of the supercool heat exchanger **(210)** is set based on the degree of supercooling of the refrigerant of the refrigerant circuit **(20)**. In other words, the control means **(240)** estimates, based on the refrigerant supercooling degree, the load state of the refrigerating apparatus and makes a decision that the load has increased, whenever there is a decrease in the degree of supercooling. In that case, for example, the target value is set low.

An eighteenth problem solving means of the invention provides a refrigerating apparatus according to the twelfth problem solving means in which the ambient condition of the supercool heat exchanger **(210)** is the flow rate of refrigerant of the refrigerant circuit (20) flowing through the supercool heat exchanger **(210)**.

In the above problem solving means, the target value of the outlet refrigerant temperature of the supercool heat exchanger **(210)** is set based on the refrigerant flow rate of the supercool heat exchanger **(210)**. In other words, the control means **(240)** estimates, based on the refrigerant flow rate of the supercool heat exchanger **(210)**, the load state of the refrigerating apparatus and makes a decision that the load has increased, whenever there is an increase in the refrigerant flow rate. In that case, for example, the target value is set low.

A nineteenth problem solving means of the invention provides a refrigerating apparatus according to the twelfth problem solving means in which the ambient condition of the supercool heat exchanger **(210)** is the difference between temperatures of cooling fluid of the cooling fluid circuit **(220)** prior to and after supercooling of refrigerant of the refrigerant circuit **(20)** in the supercool heat exchanger **(210)**.

In the above problem solving means, the target value of the outlet refrigerant temperature of the supercool heat exchanger **(210)** is set based on the difference between temperatures of cooling fluid prior to and after supercooling. In other words, the control means **(240)** estimates, based on the difference between temperatures of cooling fluid prior to and after supercooling, the load state of the refrigerating apparatus and makes a decision that the load has increases, whenever there is a decrease in the temperature difference. In that case, for example, the target value is set low.

A twentieth problem solving means of the invention provides a refrigerating apparatus according to the twelfth problem solving means in which the ambient condition of the supercool heat exchanger **(210)** is the flow rate of cooling fluid of the cooling fluid circuit (220) flowing through the supercool heat exchanger **(210)**.

In the above problem solving means, the target value of the outlet refrigerant temperature of the supercool heat exchanger **(210)** is set based on the flow rate of the cooling fluid of the supercool heat exchanger **(210)**. In other words, the control means (240) estimates, based on the cooling fluid flow rate, the load state of the refrigerating apparatus and makes a decision that the load has increased, whenever there is an increase in the cooling fluid flow rate. In that case, for example, the target value is set low.

A twenty-first problem solving means of the invention provides a refrigerating apparatus according to the twelfth problem solving means in which the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle. And the ambient condition of the supercool heat exchanger (210) is the high pressure of supercool refrigerant in the supercool refrigerant circuit **(220)**.

In the above problem solving means, the target value of the outlet refrigerant temperature of the supercool heat exchanger **(210)** is set based on the high pressure of the supercool fluid of the supercool refrigerant circuit **(220)**. In other words, the control means **(240)** estimates, based on the supercool fluid high pressure, the load state of the refrigerating apparatus and makes a decision that the load has increased, whenever there is an increase in the supercool fluid high pressure. In that case, for example, the target value is set low.

A twenty-second problem solving means of the invention provides a refrigerating apparatus according to the twelfth problem solving means in which the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle. And the ambient condition of the supercool heat exchanger **(210)** is the pressure difference between the high pressure and the low pressure of supercool refrigerant in the supercool refrigerant circuit **(220)**.

In the above problem solving means, the target value of the outlet refrigerant temperature of the supercool heat exchanger **(210)** is set based on the pressure difference between the high pressure and the low pressure of the supercool refrigerant of the supercool refrigerant circuit **(220)**. In other words, the control means **(240)** estimates, based on the supercool refrigerant high-low pressure difference, the load state of the refrigerating apparatus and makes a decision that the load has increased, whenever there is an increase in the supercool fluid high-low pressure difference. In that case, for example, the target value is set low.

A twenty-third problem solving means of the invention provides a refrigerating apparatus according to the sixteenth problem solving means in which the control means **(240)** is configured to decrease the target value as the temperature of outside air increases.

From the fact that as the temperature of outside air increases, the load of the refrigerating apparatus increases, it is required that, in the aforesaid problem solving means, for example, the operating capacity of the pump mechanism **(221)** be increased in order to maintain the outlet refrigerant temperature of the supercool heat exchanger **(210)** at the target value even if the target value is not changed. On the other hand, in this problem solving means, the target value is lowered by the control means **(240)** as the temperature of outside air becomes higher. And, in order to bring the outlet refrigerant temperature of the supercool heat exchanger **(210)** to a lower target value, it becomes necessary to further increase the operating capacity of the pump mechanism **(221),** in other words it is required that the amount of supply work of the cooling fluid of the pump mechanism **(221)** be increased. Therefore, in this invention, when the load of the refrigerating apparatus increases due to the rise of the outside air temperature, the control means **(240)** controls the target value so that the power consumption of the cooling fluid circuit **(220)** is preferentially increased.

EFFECTS

In accordance with the first problem solving means, the control means **(240)** reduces the power consumption of the pump mechanism **(221)** either based on the state of refrigerant of the refrigerant circuit **(20)** flowing through the supercool heat exchanger **(210)** or based on the state of cooling fluid of the cooling fluid circuit **(220)** and the temperature of outside air. This therefore makes it possible for the control means **(240)** to reduce the power consumption of a compressor such as the pump mechanism **(221)** without having to receive any signals indicative of the operating status of the refrigerant circuit **(20)**. This reduces the power consumption of the cooling fluid circuit **(220),** thereby making it possible to control the overall power consumption of the refrigerating apparatus. This ensures that the refrigerating apparatus is able to operate within the contract demand.

In addition, even when the cooling fluid circuit **(220)** is additionally installed to an existing refrigerating apparatus, there is no need to arrange any new communication wiring for the transferring of signals between the refrigerant circuit **(20)** and the cooling fluid circuit **(220)**. Accordingly, it becomes possible to reduce the number of operational man-hours required to attach the cooling fluid circuit **(220)** to the refrigerating apparatus. Further, it becomes possible to enhance the cooling capacity while preventing troubles (e.g. faulty wiring) caused by human errors from occurring during the installation work.

Furthermore, in accordance with the second problem solving means, it is arranged such that power consumption relating to the refrigerant circuit **(20)** is estimated based on the refrigerant state of the refrigerant circuit **(20)** and other parameter. This arrangement ensures that the amount of reduction in power consumption relating to the cooling fluid circuit **(220)** can be grasped. This ensures that the refrigerating apparatus is able to operate within the contract demand.

In addition, in accordance with the eleventh problem solving means, the heat absorption temperature or the evaporating temperature of cooling fluid in the supercool heat exchanger **(210)** is higher than the evaporating temperature of refrigerant in the utilization side heat exchanger **(101, 111, 131)**. The difference between the high pressure and the low pressure of cooling fluid in front of and behind the pump mechanism **(221)** of the cooling fluid circuit **(220)** is smaller than the difference between the high pressure and the low pressure of the refrigeration cycle in the refrigerant circuit **(20)**. And in the refrigerating apparatus of the present invention, the amount of refrigerant circulation is not increased in the refrigerant circuit **(20)** having a greater high-low pressure difference, but the power consumption (the amount of work) of the pump mechanism **(221)** et cetera is increased so that the flow rate of cooling fluid is increased in the cooling fluid circuit **(220)** having a smaller high-low pressure difference, whereby the power consumption of the cooling fluid circuit **(220)** is preferentially increased. To sum up, the amount of work of the pump mechanism **(221)** et cetera whose load is originally small is preferentially increased to thereby cope with the increase of the load. For this reason, it becomes possible to control the increase in input power necessary for dealing with the increase in load, thereby making it possible to prevent the drop in coefficient of performance. As a result the amount of increase in overall power consumption of the refrigerating apparatus can be controlled.

Furthermore, in accordance with the twelfth problem solving means, the target value is set based on the ambient condition of the supercool heat exchanger **(210),** e.g. the temperature of outside air, the flow rate of refrigerant et cetera, so that the power consumption of the cooling fluid circuit **(220)** is preferentially increased if there is an increase in load. Accordingly, it becomes possible to ensure that the power consumption of the cooling fluid circuit **(220)** is preferentially increased depending on the load state.

Besides, since the load state of the refrigerating apparatus is estimated using only the information obtained within the cooling fluid circuit **(220),** this eliminates the need for providing communication wiring for the transferring of signals between the refrigerant circuit **(20)** and the cooling fluid circuit **(220).**

Additionally, in accordance with the fourteenth or fifteenth problem solving means, the power consumption of the supercool refrigerant circuit **(220)** can be easily increased by just regulating the operating capacity of the supercool compressor **(221)** or the operating capacity of the fan **(230),** whereby the overall power consumption of the refrigerating apparatus can be controlled.

Finally, in accordance with the twenty-third problem solving means, as the temperature of outside air increases, the power consumption of the pump mechanism **(221)** et cetera of the cooling fluid circuit **(220)** is increased in preference to the heat source side compressor **(41, 42, 43)** et cetera of the refrigerant circuit **(20).** Consequently, the power consumption of the cooling fluid circuit **(220)** can be more preferentially increased depending on the load state, thereby making it possible to more easily and efficiently prevent the drop in coefficient of performance of the refrigerating apparatus.

Consequently, the increase in overall power consumption can be inhibited.

**BRIEF DESCRIPTION OF THE DRAWINGS**

Figure **1** is a piping system diagram which illustrates an arrangement of a refrigerating apparatus provided with a supercool unit;
Figure **2** is a piping system diagram which illustrates the operation of the refrigerating apparatus during cooling operation;
Figure **3** is a piping system diagram which illustrates the operation of the refrigerating apparatus during heating operation;
Figure **4** is a graphical representation of the variation in electrical energy of an outdoor unit in a first embodiment of the present invention;
Figure **5** is a graphical representation of the variation in electrical energy of an outdoor unit in a modification of the first embodiment;

Figure **6** graphically represents the target outlet temperature of liquid refrigerant in a fourth embodiment of the present invention; and
Figure 7 is a flow chart which shows the operation control procedure of a controller in the fourth embodiment.

**BEST MODE FOR CARRYING OUT THE INVENTION**

In the following, embodiments of the present invention are described in detail with reference to the drawings.

FIRST EMBODIMENT OF THE INVENTION

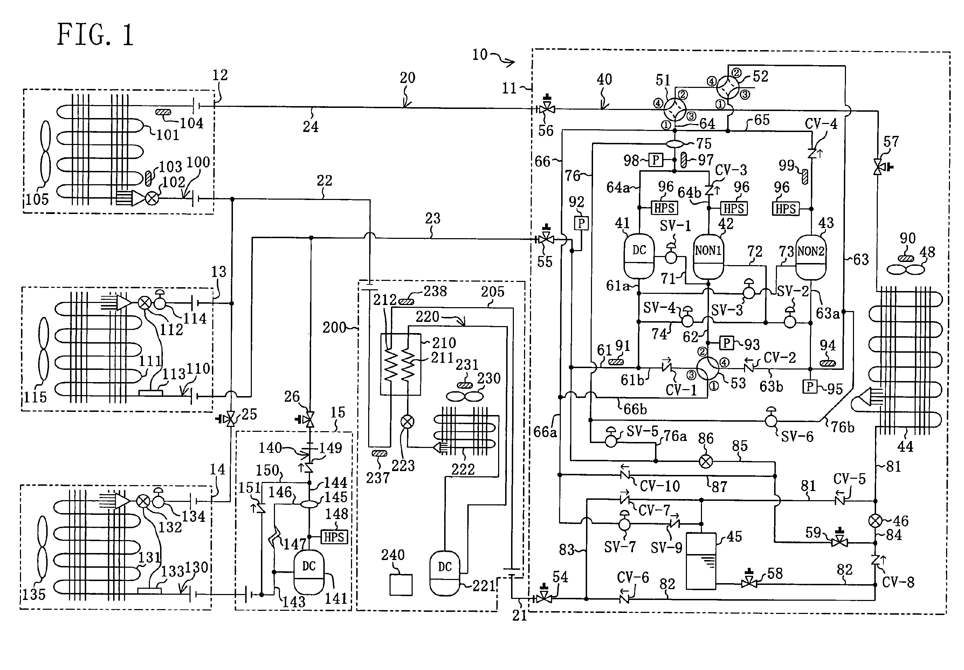

A first embodiment of a refrigerating apparatus **(10)** according to the present invention is intended for installation in a convenience store or the like and provides air conditioning of the inside of the store and cooling of the inside of showcases. As shown in Figure 1, the refrigerating apparatus **(10)** is provided with a supercool refrigerant circuit **(220)** which includes a supercool heat exchanger **(210)** and a supercool compressor **(221)** and through which supercool refrigerant as cooling fluid flows, and a refrigerant circuit **(20)** which includes utilization side heat exchangers **(101, 111, 131)** and heat source side compressors **(41, 42, 43).** The refrigerating apparatus **(10)** is configured such that refrigerant flowing through the refrigerant circuit **(20)** is supercooled through the supercool heat exchanger **(210)** of the supercool refrigerant circuit **(220).** In other words, the supercool refrigerant circuit **(220)** constitutes a cooling fluid circuit in accordance with the present invention.

Hereinafter, the construction of the refrigerating apparatus **(10)** is described more specifically.

The refrigerating apparatus **(10)** includes an outdoor unit **(11),** an air conditioning unit **(12),** a cold storage showcase **(13),** a freeze storage showcase **(14),** a booster unit **(15),** and a supercool unit **(200).** For the case of the refrigerating apparatus **(10),** the outdoor unit **(11)** and the supercool unit **(200)** are installed outdoors, while the rest including the air conditioning unit **(12)** are installed in the inside of, for example, a convenience store.

The supercool unit **(200)** includes, in addition to the supercool refrigerant circuit **(220)** and the supercool heat exchanger **(210),** a refrigerant path **(205)** and a controller **(240)** as a control means.

The outdoor unit **(11)** is provided with an outdoor circuit **(40).** The air conditioning unit **(12)** is provided with an air conditioning circuit **(100).** The cold storage showcase **(13)** is provided with a cold storage circuit **(110).** The freeze storage showcase **(14)** is provided with a freeze storage circuit **(130).** The booster unit **(15)** is provided with a booster circuit **(140).** In the refrigerating apparatus **(10),** these circuits **(40, 100, ...)** and the refrigerant path **(205)** of the supercool unit **(200)** are connected by pipes to thereby form the refrigerant circuit **(20)** of the refrigerating apparatus **(10)** through which refrigerant flows.

In addition, the refrigerant circuit **(20)** is provided with a first liquid side interconnecting pipe line **(21)**, a second liquid side interconnecting pipe line **(22)**, a first gas side interconnecting pipe line **(23)**, and a second gas side interconnecting pipe line **(24)**.

The first liquid side interconnecting pipe line **(21)** brings one end of the refrigerant path **(205)** of the supercool unit **(200)** into fluid communication with the outdoor circuit **(40)**. One end of the second liquid side interconnecting pipe line **(22)** is fluidly connected with the other end of the refrigerant path **(205)**. The other end of the second liquid side interconnecting pipe line **(22)** branches off into three branch pipes which are fluidly connected with the air conditioning circuit **(100)**, the cold storage circuit **(110)**, and the freeze storage circuit **(130)**, respectively. Of the branch pipes branched off from the second liquid side interconnecting pipe line **(22)**, the branch pipe in fluid communication with the freeze storage circuit **(130)** is provided with a liquid side closing valve **(25)**.

One end of the first gas side interconnecting pipe line **(23)** branches off into two branch pipes which are fluidly connected with the cold storage circuit **(110)** and the booster circuit **(140)**, respectively. Of the branch pipes branched off from the first gas side interconnecting pipe line **(23)**, the branch pipe in fluid communication with the booster circuit **(140)** is provided with a gas side closing valve **(26)**. The other end of the first gas side interconnecting pipe line **(23)** is fluidly connected with the outdoor circuit **(40)**. The second gas side interconnecting pipe line (24) brings the air conditioning circuit **(100)** into fluid communication with the outdoor circuit **(40)**.

OUTDOOR UNIT

The outdoor unit **(11)** constitutes a heat source side unit of the refrigerating apparatus **(10)**. The outdoor unit **(11)** has the outdoor circuit **(40)**.

The outdoor circuit **(40)** is provided with a variable capacity compressor **(41)** serving as a heat source side compressor, a first fixed capacity compressor **(42)**, and a second fixed capacity compressor **(43)**. In addition, the outdoor circuit **(40)** further includes an outdoor heat exchanger **(44)**, a receiver **(45)**, and an outdoor expansion valve **(46)**. Furthermore, the outdoor circuit **(40)** is provided with three suction pipes **(61, 62, 63)**, two discharge pipes **(64, 65)**, four liquid pipes **(81, 82, 83, 84)**, and a single high pressure gas pipe **(66)**. The outdoor circuit **(40)** further includes three four way switching valves **(51, 52, 53)**, a single liquid side closing valve **(54)**, and two gas side closing valves **(55, 56)**.

In the outdoor circuit **(40)**, the first liquid side interconnecting pipe line **(21)** is fluidly connected with the liquid side closing valve **(54)**; the first gas side interconnecting pipe line **(23)** is fluidly connected with the first gas side closing valve **(55)**; and the second gas side interconnecting pipe line **(24)** is fluidly connected with the second gas side closing valve **(56)**.

The variable capacity compressor **(41)**, the first fixed capacity compressor **(42)**, and the second fixed capacity compressor **(43)** are all scroll compressors of the hermetic, high pressure dome type. Electric power is supplied through an inverter to the variable capacity compressor **(41)**. The output frequency of the inverter is changed to thereby vary the rotating speed of a compressor motor for the variable capacity compressor **(41)**, so that the variable capacity compressor **(41)** becomes variable in its capacity. On the other hand, the capacity of the first and second fixed capacity compressors **(42, 43)** is unmodifiable because their associated compressor motors are each constantly operated at a respective fixed rotating speed.

One end of the first suction pipe **(61)** is fluidly connected with the first gas side closing valve **(55)**. The other end of the first suction pipe **(61)** is branched off into a first branch pipe **(61a)** and a second branch pipe **(61b)**, wherein the first branch pipe **(61a)** is fluidly connected with the suction side of the variable capacity compressor **(41)**, while the second branch pipe **(61b)** is fluidly connected with the third four way switching valve **(53)**. The second branch pipe **(61b)** of the first suction pipe **(61)** is provided with a check valve **(CV-1)** which permits only refrigerant distribution from the first gas side closing valve **(55)** towards the third four way switching valve **(53)**.

One end of the second suction pipe **(62)** is fluidly connected with the third four way switching valve **(53)** while the other end thereof is fluidly connected with the suction side of the first fixed capacity compressor **(42)**.

One end of the third suction pipe **(63)** is fluidly connected with the second four way switching valve **(52)**. The other end of the third suction pipe **(63)** is branched off into a first branch pipe **(63a)** and a second branch pipe **(63b)**, wherein the first branch pipe **(63a)** is fluidly connected with the suction side of the second fixed capacity compressor **(43)**, while the second branch pipe **(63b)** is fluidly connected with the third four way switching valve **(53)**. The second branch pipe **(63b)** of the third suction pipe **(63)** is provided with a check valve **(CV-2)** which permits only refrigerant distribution from the second four way switching valve **(52)** towards the third four way switching valve **(53)**.

One end of the first discharge pipe **(64)** is branched off into a first branch pipe **(64a)** and a second branch pipe **(64b)**, wherein the first branch pipe **(64a)** is fluidly connected with the discharge side of the variable capacity compressor **(41)**, while the second branch pipe **(64b)** is fluidly connected with the discharge side of the first fixed capacity compressor **(42)**. The other end of the first discharge pipe **(64)** is fluidly connected with the first four way switching valve **(51)**. The second branch pipe **(64b)** of the first discharge pipe **(64)** is provided with a check valve **(CV-3)** which permits only refrigerant distribution from the first fixed capacity compressor **(42)** towards the first four way switching valve **(51)**.

One end of the second discharge pipe **(65)** is fluidly connected with the suction side of the second fixed capacity compressor **(43)**, while the other end thereof is fluidly connected with the first discharge pipe **(64)** just before the first four way switching valve **(51)**. The second discharge pipe **(65)** is provided with a check valve **(CV-4)** which permits only refrigerant distribution from the second fixed capacity compressor **(43)** towards the first four way switching valve **(51)**.

The outdoor heat exchanger **(44)** is a fin and tube heat exchanger of the cross fin type. The outdoor heat exchanger **(44)** effects refrigerant/outdoor air heat exchange. One end of the outdoor heat exchanger **(44)** is fluidly connected, by way of the closing valve **(57)**, with the first four way switching valve **(51)**. On the other hand, the other end of the outdoor heat exchanger **(44)** is fluidly connected, by way of the first liquid pipe **(81)**, with the top of the receiver **(45)**. The first liquid pipe **(81)** is provided with a check valve **(CV-5)** which permits only refrigerant distribution from the outdoor heat exchanger **(44)** towards the receiver **(45)**.

One end of the second liquid pipe **(82)** is fluidly connected, by way of the closing valve **(58)**, with the bottom of the receiver **(45)**. The other end of the second liquid pipe **(82)** is fluidly connected with the liquid side closing valve **(54)**. The second liquid pipe **(82)** is provided with a check valve **(CV-6)** which permits only refrigerant distribution from the receiver **(45)** towards the liquid side closing valve **(54)**.

Between the check valve **(CV-6)** and the liquid side closing valve **(54)**, one end of the third liquid pipe **(83)** is fluidly connected with the second liquid pipe **(82)**. The other end of the third liquid pipe **(83)** is fluidly connected, by way of the first liquid pie **(81)**, with the top of the receiver **(45)**. In addition, the third liquid pipe **(83)** is provided with a check valve **(CV-7)** which permits only refrigerant distribution from the one end towards the other end thereof.

Between the closing valve **(58)** and the check valve **(CV-6)**, one end of the fourth liquid pipe **(84)** is fluidly connected with the second liquid pipe **(82)**. Between the outdoor heat exchanger **(44)** and the check valve **(CV-5)**, the other end of the fourth liquid pipe **(84)** is fluidly connected with the first liquid pipe **(81)**. In addition, the fourth liquid pipe **(84)** is provided with a check valve **(CV-8)** and the outdoor expansion valve **(46)** in that order in the direction extending from the one end to the other end thereof. The check valve **(CV-8)** permits only refrigerant distribution from the one end towards the other end of the fourth liquid pipe **(84)**. The outdoor expansion valve **(46)** is formed by an electronic expansion valve.

One end of the high pressure gas pipe **(66)** is fluidly connected with the first discharge pipe **(64)** just before the first four way switching valve **(51)**. The other end of the high pressure gas pipe **(66)** is branched off into a first branch pipe **(66a)** and a second branch pipe **(66b)**, wherein the first branch pipe **(66a)** is fluidly connected with the first liquid pipe (81) on the downstream side of the check valve **(CV-5)** while the second branch pipe **(66b)** is fluidly connected with the third four way switching valve **(53)**. The first branch pipe **(66a)** of the high pressure gas pipe **(66)** is provided with a solenoid valve **(SV-7)** and a check valve **(CV-9)**. The check valve **(CV-9)** is positioned downstream of the solenoid valve **(SV-7)** and permits only refrigerant distribution from the solenoid valve **(SV-7)** towards the first liquid pipe **(81)**.

The first four way switching valve **(51)** has four ports, wherein the first port is in fluid communication with the terminal end of the first discharge pipe **(64)**; the second port is in fluid communication with the second four way switching valve **(52)**; the third port is in fluid communication with the outdoor heat exchanger **(44)**; and the fourth port is in fluid communication with the second gas side closing valve **(56)**. The first four way switching valve **(51)** is switchable between a first state (indicated by solid line of Figure **1**) and a second state (indicated by broken line of Figure **1**). The first state allows fluid communication between the first port and the third port and fluid communication between the second port and the fourth port, while the second state allows fluid communication between the first port and the fourth port and fluid communication between the second port and the third port.

The second four way switching valve **(52)** has four ports, wherein the first port is in fluid communication with the second discharge pipe **(65)** on the downstream side of the check valve **(CV-4)**; the second port is in fluid communication with the start end of the second suction pipe **(62)**; and the fourth port is in fluid communication with the second port of the first four way switching valve **(51)**. The third port of the second four way switching valve **(52)** is closed. The second four way switching valve **(52)** is switchable between a first state (indicated by solid line of Figure **1**) and a second state (indicated by broken line of Figure **1**). The first state allows fluid communication between the first port and the third port and fluid communication between the second port and the fourth port, while the second state allows fluid communication between the first port and the fourth port and fluid communication between the second port and the third port.

The third four way switching valve **(53)** has four ports, wherein the first port is in fluid communication with the terminal end of the second branch pipe **(66b)** of the high pressure gas pipe **(66)**; the second port is in fluid communication with the start end of the second suction pipe **(62)**; the third port is in fluid communication with the terminal end of the second branch pipe **(63b)** of the third suction pipe **(63)**; and the fourth port is in fluid communication with the terminal end of the second branch pipe **(63b)** of the third suction pipe **(63)**. The third four way switching valve **(53)** is switchable between a first state (indicated by solid line of Figure **1**) and a second state (indicated by broken line of Figure **1**). The first state allows fluid communication between the first port and the third port and fluid communication between the second port and the fourth port, while the second state allows fluid communication between the first port and the fourth port and fluid communication between the second port and the third port.

The outdoor circuit **(40)** further includes an injection pipe **(85)**, a communicating pipe **(87)**, an oil separator **(75)**, and an oil return pipe **(76)**. In addition, the outdoor circuit **(40)** is provided with four oil level equalizing pipes **(71, 72, 73, 74)**.

The injection pipe **(85)** is employed to perform so-called liquid injection. Between the check valve **(CV-8)** and the outdoor expansion valve **(46)**, one end of the injection pipe **(85)** is fluidly connected with the fourth liquid pipe **(84)**. The other end of the injection pipe **(85)** is fluidly connected with the first suction pipe **(61)**. The injection pipe **(85)** is provided with a closing valve **(59)** and a flow rate regulating valve **(86)** in that order in the direction extending from the one end to the other end thereof. The flow rate regulating valve **(86)** is formed by an electronic expansion valve.

Between the closing valve **(59)** and the flow rate regulating valve **(86)**, one end of the communicating pipe **(87)** is fluidly connected with the injection pipe **(85)**. The other end of the communicating pipe **(87)** is fluidly connected with the first branch pipe **(66a)** of the high pressure gas pipe **(66)** on the upstream side of the solenoid valve **(SV-7)**. The communicating pipe **(87)** is provided with a check valve **(CV-10)** which permits only refrigerant distribution from the one end to the other end thereof.

The oil separator **(75)** is disposed in the first discharge pipe **(64)** on the upstream side of the junction of the second discharge pipe **(65)** and the high pressure gas pipe **(66)**. The oil separator **(75)** is employed for separation of refrigeration oil from gases discharged from the compressors **(41, 42)**.

One end of the oil return pipe **(76)** is fluidly connected with the oil separator **(75)**. The other end of the oil return pipe **(76)** is branched off into a first branch pipe **(76a)** and a second branch pipe **(76b)**, wherein the first branch pipe **(76a)** is fluidly connected with the injection pipe **(85)** on the downstream side of the flow rate regulating valve **(86)** while the second branch pipe **(76b)** is fluidly connected with the second suction pipe **(62)**. In addition, the first and second branch pipes **(76a, 76b)** of the oil return pipe **(76)** are provided with solenoid valves **(SV-5, SV-6)**, respectively. When the solenoid valve **(SV-5)** of the first branch pipe **(76a)** is placed in the open state, refrigeration oil separated in the oil separator **(75)** is fed back into the first suction pipe **(61)** through the injection pipe **(85)**. On the other hand, when the solenoid valve **(SV-6)** of the second branch pipe **(76b)** is placed in the open state, refrigeration oil separated in the oil separator **(75)** is fed back into the second suction pipe **(62)**.

One end of the first oil level equalizing pipe **(71)** is fluidly connected with the variable capacity compressor **(41)** while the other end thereof is fluidly connected with the second suction pipe **(62)**. The first oil level equalizing pipe **(71)** is provided with a solenoid valve **(SV-1)**. One end of the second oil level equalizing pipe **(72)** is fluidly connected with the first fixed capacity compressor **(42)** while the other end thereof is fluidly connected with the first branch pipe **(63a)** of the third suction pipe **(63)**. The second oil level equalizing pipe **(72)** is provided with a solenoid valve **(SV-2)**. One end of the third oil level equalizing pipe **(73)** is fluidly connected with the second fixed capacity compressor **(43)** while the other end thereof is fluidly connected with the first branch pipe **(61a)** of the first suction pipe **(61)**. The third oil level equalizing pipe **(73)** is provided with a solenoid valve **(SV-3)**. One end of the fourth oil level equalizing pipe **(74)** is fluidly connected with the second oil level equalizing pipe **(72)** on the upstream side of the solenoid valve **(SV-2)** while the other end thereof is fluidly connected with the first branch pipe **(61a)** of the first suction pipe **(61)**. The fourth oil level equalizing pipe **(74)** is provided with a solenoid valve **(SV-4)**. By properly opening/closing the solenoid valves **(SV-1, SV-2, SV-3, SV-4)** of the oil level equalizing pipes **(71, 72, 73, 74)**, the storage amount of refrigeration oil in each of the compressors **(41, 42, 43)** is equalized.

The outdoor circuit **(40)** is further provided with various sensors and pressure switches (not shown).

In addition, the outdoor unit **(11)** is provided with an outdoor fan **(48)**. Outdoor air is supplied to the outdoor heat exchanger **(44)** by the outdoor fan **(48)**.

AIR CONDITIONING UNIT

The air conditioning unit **(12)** constitutes a utilization side unit. The air conditioning unit **(12)** has the air conditioning circuit **(100)**. The liquid side end of the air conditioning circuit **(100)** is fluidly connected with the second liquid side interconnecting pipe line **(22)** while the gas side end thereof is fluidly connected with the second gas side interconnecting pipe line **(24)**.

In the air conditioning circuit **(100)**, an air conditioning expansion valve **(102)** and an air conditioning heat exchanger **(101)** as a utilization side heat exchanger are disposed in that order in the direction extending from the liquid side end towards the gas side end thereof. The air conditioning heat exchanger **(101)** is a fin and tube heat exchanger of the cross fin type. The air conditioning heat exchanger **(101)** effects refrigerant/room air heat exchange. The air conditioning expansion valve **(102)** is formed by an electronic expansion valve.

The air conditioning unit **(12)** is provided with an air conditioning fan **(105)**. The air conditioning fan **(105)** provides a supply of room air in the store to the air conditioning heat exchanger **(101)**.

COLD STORAGE SHOWCASE

The cold storage showcase **(13)** constitutes a utilization side unit. The cold storage showcase **(13)** has the cold storage circuit **(110)**. The liquid side end of the cold storage circuit **(110)** is fluidly connected with the second liquid side interconnecting pipe line **(22)** while the gas side end thereof is fluidly connected with the first gas side interconnecting pipe line **(23).**

In the cold storage circuit **(110),** a cold storage solenoid valve **(114),** a cold storage expansion valve **(112),** and a cold storage heat exchanger **(111)** as a utilization side heat exchanger are disposed in that order in the direction extending from the liquid side end towards the gas side end thereof. The cold storage heat exchanger **(111)** is a fin and tube heat exchanger of the cross fin type. The cold storage heat exchanger **(111)** effects refrigerant/storage chamber air heat exchange. The cold storage expansion valve **(112)** is formed by a thermostat expansion valve. A temperature sensing tube **(113)** of the cold storage expansion valve **(112)** is attached to a pipe line on the outlet side of the cold storage heat exchanger **(111).**

The cold storage showcase **(13)** is provided with a cold storage chamber fan **(115).** The cold storage chamber fan **(115)** provides a supply of storage chamber air in the cold storage showcase **(13)** to the cold storage heat exchanger **(111).**

FREEZE STORAGE SHOWCASE

The freeze storage showcase **(14)** constitutes a utilization side unit. The freeze storage showcase **(14)** has the freeze storage circuit **(130).** The liquid side end of the freeze storage circuit **(130)** is fluidly connected with the second liquid side interconnecting pipe line **(22).** In addition, the gas side end of the freeze storage circuit **(130)** is fluidly connected, by way of a pipe line, with the booster unit **(15).**

In the freeze storage circuit **(130),** a freeze storage solenoid valve **(134),** a freeze storage expansion valve **(132),** and a freeze storage heat exchanger **(131)** as a utilization side heat exchanger are disposed in that order in the direction extending from the liquid side end towards the gas side end thereof. The freeze storage heat exchanger **(131)** is a fin and tube heat exchanger of the cross fin type. The freeze storage heat exchanger **(131)** effects refrigerant/storage chamber air heat exchange. The freeze storage expansion valve **(132)** is formed by a thermostat expansion valve. A temperature sensing tube **(133)** of the freeze storage expansion valve **(132)** is attached to a pipe line on the outlet side of the freeze storage heat exchanger **(131).**

The freeze storage showcase **(14)** is provided with a freeze storage chamber fan **(135).** The freeze storage chamber fan **(135)** provides a supply of storage chamber air in the freeze storage showcase **(14)** to the freeze storage heat exchanger **(131).**

BOOSTER UNIT

The booster unit **(15)** is provided with the booster circuit **(140).** The booster circuit **(140)** includes a booster compressor **(141),** a suction pipe **(143),** a discharge pipe **(144),** and a bypass pipe **(150).**

The booster compressor **(141)** is a scroll compressor of the hermetic, high pressure dome type. Electric power is supplied through an inverter to the booster compressor **(141).** The output frequency of the inverter is changed to thereby vary the rotating speed of a compressor motor for the booster compressor **(141),** so that the booster compressor **(141)** is variable in its capacity.

The terminal end of the suction pipe **(143)** is fluidly connected with the suction side of the booster compressor **(141).** The start end of the suction pipe **(143)** is fluidly connected, by way of a pipe line, with the gas side end of the freeze storage circuit **(130).**

The start end of the discharge pipe **(144)** is fluidly connected with the discharge side of the booster compressor **(141)** while the terminal end thereof is fluidly connected with the first gas side interconnecting pipe line **(23).** The discharge pipe **(144)** is provided with a high pressure switch **(148),** an oil separator **(145),** and a discharge side check valve **(149)** in that order in the direction extending from the start end towards the terminal end thereof. The discharge side check valve **(149)** permits only refrigerant distribution from the start end towards the terminal end of the discharge pipe **(144).**

The oil separator **(145)** is employed for separation of refrigeration oil from gases discharged from the booster compressor **(141).** One end of an oil return pipe **(146)** is fluidly connected with the oil separator **(145).** The other end of the oil return pipe **(146)** is fluidly connected with the suction pipe **(143).** The oil return pipe **(146)** is provided with a capillary tube **(147).** Refrigeration oil separated in the oil separator **(145)** is fed back to the suction side of the booster compressor **(141)** through the oil return pipe **(146).**

The start end of the bypass pipe **(150)** is fluidly connected with the suction pipe **(143)** while the terminal end thereof is fluidly connected with the discharge pipe **(64)** between the oil separator **(145)** and the discharge side check valve **(149).** The bypass pipe **(150)** is provided with a bypass check valve **(151)** which permits only refrigerant distribution from the start end towards the terminal end thereof.

SUPERCOOL UNIT

As described above, the supercool unit **(200)** is provided with the refrigerant path **(205),** the supercool refrigerant circuit **(220),** the supercool heat exchanger **(210),** and the controller **(240).**

One end of the refrigerant path **(205)** is fluidly connected with the first liquid side interconnecting pipe line **(21)** while the other end thereof is fluidly connected with the second liquid side interconnecting pipe line **(22).**

The supercool refrigerant circuit **(220)** is a closed circuit made up of the supercool compressor **(221),** the supercool outdoor heat exchanger **(222),** a supercool expansion valve **(223)** as an expansion mechanism, and the supercool heat exchanger **(210)** which are sequentially fluidly connected by a pipe line. In the supercool refrigerant circuit (220), supercool refrigerant charged is circulated by the supercool compressor (221) to thereby effect a vapor compression refrigeration cycle. In other words, supercool refrigerant different from refrigerant flowing through the refrigerant circuit (20) of the refrigerating apparatus (10) is circulated in the supercool refrigerant circuit (220). In addition, in the present embodiment, the supercool compressor (221) constitutes a pump mechanism and the supercool outdoor heat exchanger (222) constitutes a heat source side heat exchanger.

The supercool compressor (221) is a scroll compressor of the hermetic, high pressure dome type. Electric power is supplied through an inverter to the supercool compressor (221). The output frequency of the inverter is changed to thereby vary the rotating speed of a compressor motor for the supercool compressor (221), so that the supercool compressor (221) becomes variable in its capacity. The supercool outdoor heat exchanger (222) is a fin and tube heat exchanger of the cross fin type. The supercool outdoor heat exchanger (222) effects supercool refrigerant/outdoor air heat exchange. The supercool expansion valve (223) is formed by an electronic expansion valve.

The supercool heat exchanger (210) is formed by a so-called plate heat exchanger. The supercool heat exchanger (210) is provided with a plural number of first flow paths (211) and a plural number of second flow paths (212). The supercool refrigerant circuit (220) is fluidly connected with the first flow path (211), while the refrigerant path (205) is fluidly connected with the second flow path (212). The supercool heat exchanger (210) effects heat exchange between supercool refrigerant flowing through the first flow path (211) and refrigerant of the refrigerating apparatus (10) flowing through the second flow path (212).

The supercool unit (200) is provided with various sensors and pressure switches. More specifically, temperature sensors (237, 238) as temperature detecting means are arranged on both sides of the supercool heat exchanger (210) in the refrigerant path (205), respectively. In the refrigerant path (205), the outlet side refrigerant temperature sensor (237) is positioned at a part nearer to the other end than the supercool heat exchanger (210), i.e., at a part nearer to the connecting end with the second liquid side interconnecting pipe line (22). In addition, in the refrigerant path (205), the inlet side refrigerant temperature sensor (238) is positioned at a part nearer to the one end than the supercool heat exchanger (210), i.e., at a part nearer to the connecting end with the first liquid side interconnecting pipe line (21).

The supercool unit (200) further includes an outside air temperature sensor (231) for outside air temperature detection and an outdoor fan (230). The outdoor fan (230) provides a supply of outdoor air to the supercool outdoor heat exchanger (222).

Values detected, respectively, by the outlet side refrigerant temperature sensor (237), the inlet side refrigerant temperature sensor (238), the outside air temperature sensor (231) are fed to the controller (240). The controller (240) is configured, such that it controls, based on the input values detected by the sensors, the startup/shutdown of the supercool compressor (221). The controller (240) does not at all receive any signals from the refrigerating apparatus (10) made up of the outdoor unit (11), the air conditioning unit (12) et cetera. In other words, the controller (240) performs control of the operating capacity of the supercool compressor (221) based on only the information obtained within the supercool unit (200), e.g. based on the values detected by the sensors disposed in the supercool unit (200).

RUNNING OPERATION OF THE REFRIGERATING APPARATUS

Principal running operations of the refrigerating apparatus (10) are described below.

COOLING OPERATING MODE

This cooling operating mode provides cooling of storage chamber air in the cold storage showcase (13) and the freeze storage showcase (14), while providing cooling of the inside of the store by cooling of room air in the air conditioning unit (12).

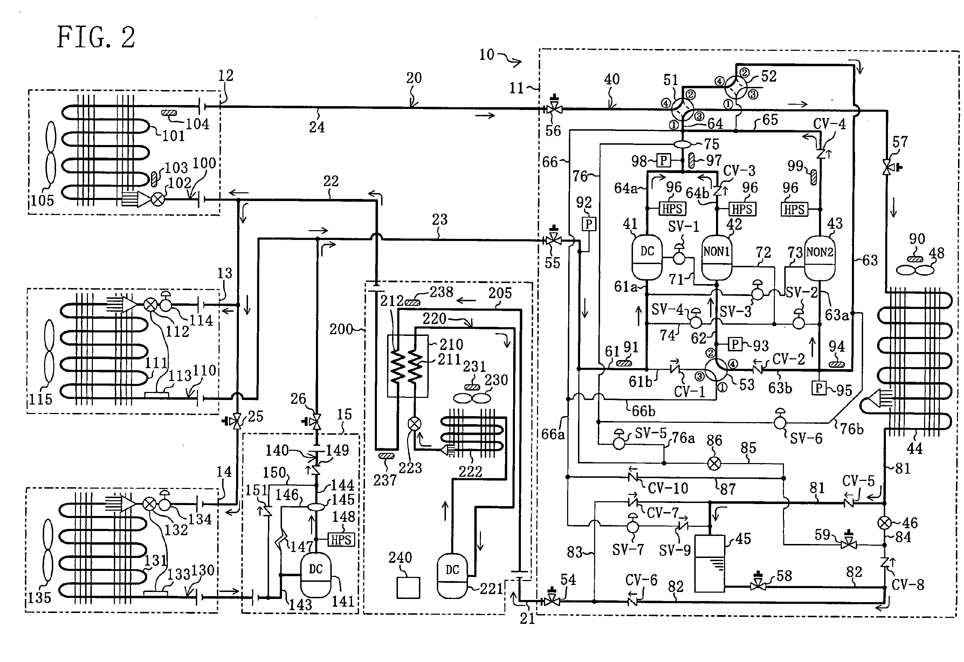

As shown in Figure 2, during the cooling operating mode, the first four way switching valve (51), the second four way switching valve (52), and the third four way switching valve (53) are all placed in the first state. In addition, the outdoor expansion valve (46) is fully closed, while the degree of opening of each of the air conditioning expansion valve (102), the cold storage expansion valve (112), and the freeze storage expansion valve (132) is properly regulated. In this state, the variable capacity compressor (41), the first fixed capacity compressor (42), the second fixed capacity compressor (43), and the booster compressor (141) are in operation. During the cooling operating mode, the supercool unit (200) enters the operating state. The running operation of the supercool unit (200) will be described later.

Flows of refrigerant discharged, respectively, from the variable capacity compressor (41), the first fixed capacity compressor (42), and the second fixed capacity compressor (43) pass through the first four way switching valve (51) and are delivered into the outdoor heat exchanger (44). In the outdoor heat exchanger (44), the refrigerant dissipates heat to outdoor air and is condensed. The refrigerant condensed in the outdoor heat exchanger (44) passes through the first liquid pipe (81), then through the receiver (45), and then through the second liquid pipe (82) and flows into the first liquid side interconnecting pipe line (21).

The refrigerant flowed into the first liquid side interconnecting pipe line (21) enters the refrigerant path (205) of the supercool unit (200). The refrigerant flowed into the refrigerant path **(205)** is further cooled during its passage through the second flow path **(212)** of the supercool heat exchanger **(210).** The liquid refrigerant (supercool refrigerant), cooled in the supercool heat exchanger **(210)** and in the supercooling state, passes through the second liquid side interconnecting pipe line **(22)** and is then distributed to the air conditioning circuit **(100),** to the cold storage circuit **(110),** and to the freeze storage circuit **(130).**

The refrigerant flowed into the air conditioning circuit **(100)** is reduced in pressure when passing through the air conditioning expansion valve **(102)** and then introduced into the air conditioning heat exchanger **(101).** In the air conditioning heat exchanger **(101),** the refrigerant absorbs heat from room air and is evaporated. At that time, in the air conditioning heat exchanger **(101),** the refrigerant evaporating temperature is set at, for example, about 5 degrees Centigrade. The room air cooled in the air conditioning heat exchanger **(101)** of the air conditioning unit **(12)** is supplied to the inside of the store.

The refrigerant evaporated in the air conditioning heat exchanger **(101)** passes through the second gas side interconnecting pipe line **(24)** and flows into the outdoor circuit **(40).** Subsequently, the refrigerant passes first through the first four way switching valve **(51)** and then through the second four way switching valve **(52)** and flows into the third suction pipe **(63).** One part of the refrigerant flowed into the third suction pipe **(63)** passes through the first branch pipe **(63a)** and is drawn into the second fixed capacity compressor **(43),** while the rest of the refrigerant passes through the second branch pipe **(63b),** then through the third four way switching valve **(53),** and then through the second suction pipe **(62)** and is drawn into the first fixed capacity compressor **(42).**

The refrigerant flowed into the cold storage circuit **(110)** is reduced in pressure when passing through the cold storage expansion valve **(112)** and then introduced into the cold storage heat exchanger **(111).** In the cold storage heat exchanger **(111),** the refrigerant absorbs heat from storage chamber air and is evaporated. At that time, the refrigerant evaporating temperature in the cold storage heat exchanger **(111)** is set at, for example, about minus 5 degrees Centigrade. The refrigerant evaporated in the cold storage heat exchanger **(111)** flows into the first gas side interconnecting pipe line (23). In the cold storage showcase **(13),** the storage chamber air cooled in the cold storage heat exchanger **(111)** is supplied into the storage chamber, whereby the storage chamber temperature is maintained at, for example, about 5 degrees Centigrade.

The refrigerant flowed into the freeze storage circuit **(130)** is reduced in pressure when passing through the freeze storage expansion valve **(132)** and then introduced into the freeze storage heat exchanger **(131).** In the freeze storage heat exchanger **(131),** the refrigerant absorbs heat from storage chamber air and is evaporated. At that time, in the freeze storage heat exchanger **(131),** the refrigerant evaporating temperature is set at, for example, about minus 30 degrees Centigrade. In the freeze storage showcase **(14),** the storage chamber air cooled in the freeze storage heat exchanger **(131)** is supplied into the storage chamber, whereby the storage chamber temperature is maintained at, for example, about minus 20 degrees Centigrade.

The refrigerant evaporated in the freeze storage heat exchanger **(131)** flows into the booster circuit **(140)** and is then drawn into the booster compressor **(141).** The refrigerant compressed in the booster compressor **(141)** passes through the discharge pipe (144) and then flows into the first gas side interconnecting pipe line **(23).**

In the first gas side interconnecting pipe line **(23),** the refrigerant fed from the cold storage circuit **(110)** and the refrigerant fed from the booster circuit **(140)** join together. And the merged refrigerant flow passes through the first gas side interconnecting pipe line **(23)** and enters the first suction pipe **(61)** of the outdoor circuit **(40).** The refrigerant flowed into the first suction pipe **(61)** passes through the first branch pipe **(61a)** and is drawn into the variable capacity compressor **(41).**

HEATING OPERATING MODE

This heating operating mode provides cooling storage chamber air in the cold storage showcase **(13)** and the freeze storage showcase **(14)** while providing heating of the inside of the store by heating of room air in the air conditioning unit **(12).**

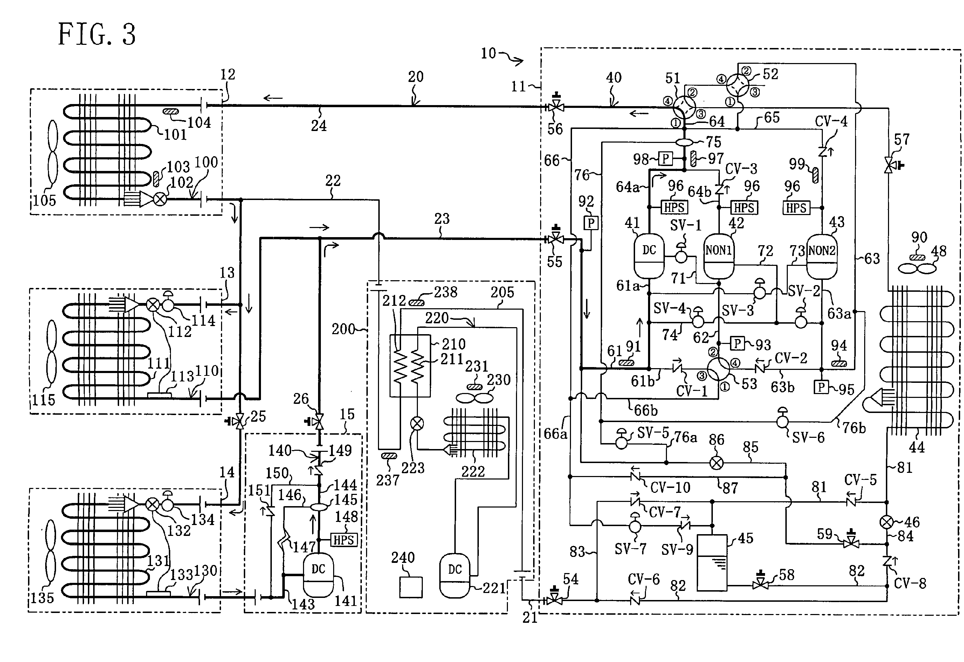

As shown in Figure **3,** in the outdoor circuit **(40),** the first four way switching valve **(51)** is placed in the second state; the second four way switching valve **(52)** is placed in the first state; and the third four way switching valve **(53)** is placed in the first state. In addition, the outdoor expansion valve **(46)** is fully closed, while the degree of opening of each of the air conditioning expansion valve **(102),** the cold storage expansion valve **(112),** and the freeze storage expansion valve **(132)** is properly regulated. In this state, the variable capacity compressor **(41)** and the booster compressor **(141)** are in operation, while on the other hand the first and second fixed capacity compressors **(42, 43)** are at rest. In addition, the outdoor heat exchanger **(44)** is fed no refrigerant and enters the stop state. During the heating operating mode, the supercool unit **(200)** enters the stop state.

Refrigerant discharged out of the variable capacity compressor **(41)** flows through the first four way switching valve **(51)** and then through the second gas side interconnecting pipe line **(24)** and is introduced into the air conditioning heat exchanger **(101)** of the air conditioning circuit **(100)** where the refrigerant dissipates heat to room air and is condensed. The room air heated in the air conditioning heat exchanger **(101)** of the air conditioning unit **(12)** is supplied into the inside of the store. The refrigerant condensed in the air conditioning heat exchanger **(101)** passes through the second liquid side interconnecting pipe line **(22)** and is then distributed to the cold storage circuit (110) and to the freeze storage circuit (130).

In each of the cold storage showcase (13) and the freeze storage showcase (14), storage chamber air cooling is provided, as in the cooling operating mode. The refrigerant flowed into the cold storage circuit (110) is evaporated in the cold storage heat exchanger (111) and thereafter flows into the first gas side interconnecting pipe line (23). On the other hand, the refrigerant flowed into the freeze storage circuit (130) is evaporated in the freeze storage heat exchanger (131), compressed in the booster compressor (141), and then flows into the first gas side interconnecting pipe line (23). The refrigerant flowed into the first gas side interconnecting pipe line (23) passes through the first suction pipe (61) and is then drawn into the variable capacity compressor (41) where the refrigerant is compressed.

As described above, in the heating operating mode, refrigerant absorbs heat in the cold storage heat exchanger (111) and in the freeze storage heat exchanger (131), while refrigerant dissipates heat in the air conditioning heat exchanger (101). Heating of the inside of the store is provided by making utilization of heat absorbed by the refrigerant in the cold storage heat exchanger (111) and heat absorbed by the freeze storage heat exchanger (131).

During the heating operating mode, the first fixed capacity compressor (42) may be operated. Whether the first fixed capacity compressor (42) is operated or not is decided depending on the cooling load in the cold storage showcase (13) as well as on the cooling load in the freeze storage showcase (14).

As described above, during the heating operating mode which is usually performed when the temperature of outside air is low, the refrigerating apparatus (10) is capable of alone performing a predetermined capacity, so that the supercool compressor (221) is never operated, unlike the cooling operating mode.

RUNNING OPERATION OF THE SUPERCOOL UNIT

The running operation of the supercool unit (200) is now described. When the supercool unit (200) is in the operating state, the supercool compressor (221) is operated and, in addition, the degree of opening of the supercool expansion valve (223) is properly regulated.

As shown in Figure 2, supercool refrigerant expelled out of the supercool compressor (221) dissipates heat to outdoor air and is condensed in the supercool outdoor heat exchanger (222). The supercool refrigerant condensed in the supercool outdoor heat exchanger (222) is reduced in pressure when passing through the supercool expansion valve (223) and then flows into the first flow path (211) of the supercool heat exchanger (210). In the first flow path (211) of the supercool heat exchanger (210), the supercool refrigerant absorbs heat from refrigerant in the second flow path (212) and then is evaporated. The supercool refrigerant evaporated in the supercool heat exchanger (210) is drawn into the supercool compressor (221) where the supercool refrigerant is compressed.

Values detected, respectively, by the outside air temperature sensor (231), the outlet side refrigerant temperature sensor (237), and the inlet side refrigerant temperature sensor (238) are fed to the controller (240). The controller (240) makes a comparison between values, respectively, detected by the two refrigerant temperature sensors (237, 238) during operation of the supercool compressor (221), and estimates, from the compare result, a degree of supercooling, i.e., the state of refrigerant of the refrigerant circuit (20) flowing through the supercool heat exchanger (210). The controller (240) is configured, such that, based on the estimated degree of supercooling and on the outside air temperature detected by the outside air temperature sensor (231), the controller (240) decides whether the operation of the supercool compressor (221) is continued or stopped.

In the following, how the controller (240) provides control is described.

In the first place, the state of refrigerant of the refrigerant circuit (20) flowing through the supercool heat exchanger (210) is estimated from the degree of supercooling of refrigerant of the refrigerant circuit (20) detected by the refrigerant temperature sensors (237, 238). The refrigerant of the refrigerant circuit (20) is sufficiently cooled by the supercool heat exchanger (210) when the degree of supercooling is large, from which it can be decided that the amount of refrigerant of the refrigerant circuit (20) that flows into the supercool heat exchanger (210) from the refrigerant circuit (20) is small. This allows the controller (240) to make an estimate that power consumption relating to the refrigerant circuit (20) is small.

The refrigerant of the refrigerant circuit (20) is not sufficiently cooled by the supercool heat exchanger (210) when the degree of supercooling is small, from which it can be decided that the amount of refrigerant of the refrigerant circuit (20) that flows into the supercool heat exchanger (210) from the refrigerant circuit (20) is large. This allows the controller (240) to make an estimate that power consumption relating to the refrigerant circuit (20) is large.

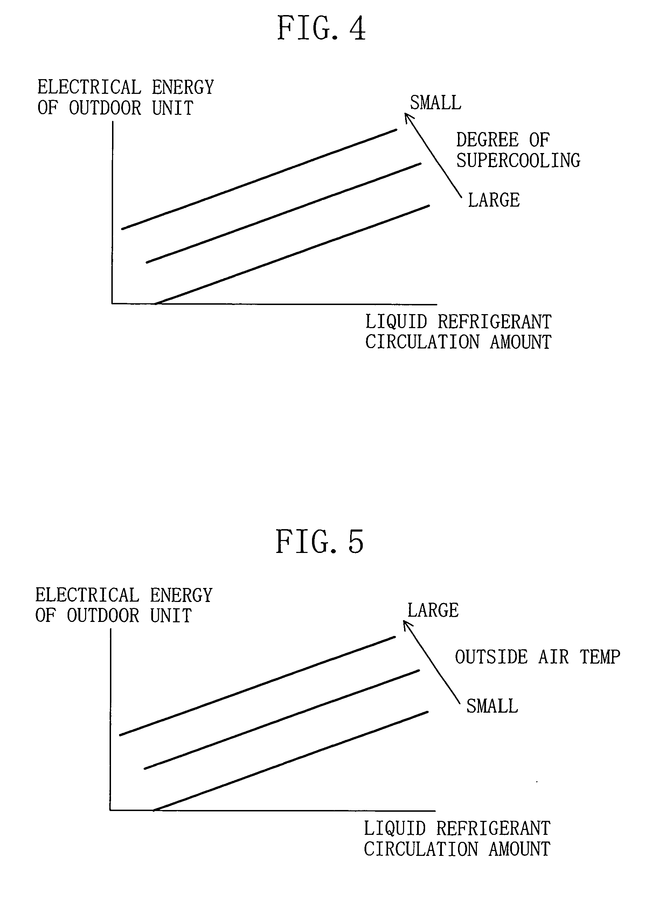

More specifically, as shown in Figure 4, with the aid of a previously prepared estimation curve, the controller (240) estimates the electrical energy of the outdoor unit (11) from the degree of supercooling as well as from the temperature of outside air. Then, the controller (240) calculates a sum of the electrical energy of the outdoor unit (11) and the electrical energy of the supercool compressor (221), and decides whether the sum calculated falls below a limit value. This limit value suffices if the total of the calculated sum and the electrical energy of other power consuming equipment does not exceed the contract demand.

The controller (240) stops the supercool compressor (221) when it decides that the sum of the electrical energy of the outdoor unit (11) and the electrical energy of the supercool compressor **(221)** exceeds the limit value. On the other hand, the controller **(240)** allows the supercool compressor **(221)** to continuously operate when it decides that the sum of the electrical energy of the outdoor unit **(11)** and the electrical energy of the supercool compressor **(221)** is below the limit value.

In the present embodiment, the overall electrical energy of the refrigerating system is reduced so as to fall below the limit value by bringing the operation of the supercool compressor **(221)** to a stop. Alternatively, it may be arranged such that the overall electrical energy of the refrigerating system is reduced by lowering the operating frequency of the supercool compressor **(221)**. Stated another way, in the present invention, the power consumption of the supercool compressor **(221)** is reduced by directly reducing the operating frequency of the supercool compressor **(221)**.

EFFECTS OF THE FIRST EMBODIMENT

In the supercool unit **(200)**, the controller **(240)** controls, based on only the information obtained within the supercool unit **(200)** (e.g. based on the values detected by the sensors arranged in the supercool unit **(200)**), the operation of the supercool compressor **(221)**. In other words, it becomes possible to control the operation of the supercool compressor **(221)** depending on the operational status of the refrigerant circuit **(20),** without the transferring of signals between the supercool unit **(200)** and the refrigerant circuit **(20).** Accordingly, for example, the supercool unit **(200)** can be attached to the refrigerant circuit **(20)** by just establishing fluid communication between the first and second liquid side interconnecting pipe lines **(21, 22)** of the refrigerant circuit **(20),** and the refrigerant path **(205)** of the supercool unit **(200),** in other words there is no need to arrange communication wiring for the transferring of signals between the refrigerant circuit **(20)** and the supercool unit **(200).**

Therefore, in accordance with the present invention, it becomes possible to reduce the number of man-hours required to attach the supercool unit **(200)** to the refrigerating apparatus **(10).** Further, it becomes possible to enhance the cooling capacity of the refrigerating apparatus **(10)** while preventing troubles (e.g. faulty wiring caused by human errors during the installation operation) from occurring and, in addition, suppressing the overall electrical energy of the refrigerating apparatus **(10)** by operating the supercooling apparatus within the contract demand.

VARIATIONS OF THE FIRST EMBODIMENT

In each of first to fifth variations of the first embodiment, the electrical energy of the outdoor unit **(11)** is estimated based on various parameters other than the degree of supercooling of the refrigerant of the refrigerant circuit **(20).**

FIRST VARIATION

The supercool unit **(200)** of the first variation may include in the refrigerant path **(205)** a flow rate sensor (not shown) as a flow rate detecting means wherein the operation of the supercool compressor **(221)** is controlled based on the flow rate of the refrigerant path **(205)** detected by the flow rate sensor. In other words, the flow rate detected by the flow rate sensor is indicative of the state of refrigerant of the refrigerant circuit **(20)** flowing through the supercool heat exchanger **(210).**

More specifically, in the supercool unit **(200),** values detected, respectively, by the flow rate sensor and the outside air temperature sensor **(231)** are fed to the controller **(240).** As shown in Figure 5, with the aid of a previously prepared estimation curve, the controller **(240)** estimates the electrical energy of the outdoor unit **(11)** from the value detected by the flow rate sensor as well as from the value detected by the outside air temperature sensor **(231).** Then, the controller **(240)** computes a sum of the estimated electrical energy of the outdoor unit **(11)** and the electrical energy of the supercool compressor **(221),** and decides whether the sum thus calculated falls below the limit value. This limit value suffices if the total of the calculated sum and the electrical energy of other power consuming equipment does not exceed the contract demand.

The controller **(240)** stops the supercool compressor **(221)** when it decides that the sum of the electrical energy of the outdoor unit **(11)** and the electrical energy of the supercool compressor **(221)** exceeds the limit value. On the other hand, the controller **(240)** allows the supercool compressor **(221)** to continuously operate when it decides that the sum of the electrical energy of the outdoor unit **(11)** and the electrical energy of the supercool compressor **(221)** is below the limit value.

SECOND VARIATION

The supercool unit **(200)** of the second variation may include two temperature sensors (temperature detecting means for supercool refrigerant temperature detection) respectively on both sides of the supercool heat exchanger **(210)** in the supercool refrigerant circuit **(220),** i.e. one on the upstream side and the other on downstream side of the first flow path **(211),** wherein the operation of the supercool compressor **(221)** is controlled based on the difference between temperatures detected by these two temperature sensors. The detected supercool refrigerant temperature difference is the difference between the temperature of refrigerant of the refrigerant circuit **(20)** prior to supercooling and the temperature of supercool refrigerant after supercooling, and indicates the state of supercool refrigerant in the supercool refrigerant circuit **(220).**

In the supercool unit **(200),** values detected by the temperature sensors and a value detected by the outside air temperature sensor **(231)** are fed to the controller **(240).** With the aid of a previously prepared estimation curve (not shown), the controller **(240)** estimates the electrical energy of the outdoor unit **(11)** from the difference between values detected by the temperature sensors as well as from a value detected by the outside air temperature sensor **(231).** For example, if the difference between values detected, respectively, by the temperature sensors is large, this indicates that the refrigerant of the refrigerant circuit **(20)** is sufficiently cooled by the supercool heat exchanger **(210).** It is therefore decided that the flow rate of refrigerant of the refrigerant circuit **(20)** in the supercool heat exchanger **(210)** is small, and there is made an estimate that power consumption relating to the refrigerant circuit **(20)** is small. On the other hand, if the difference between values detected, respectively, by the temperature sensors is small, this indicates that the refrigerant of the refrigerant circuit **(20)** is not sufficiently cooled by the supercool heat exchanger **(210).** It is therefore decided that the flow rate of refrigerant of the refrigerant circuit **(20)** in the supercool heat exchanger **(210)** is large, and there is made an estimate that power consumption relating to the refrigerant circuit **(20)** is large.

THIRD VARIATION

The supercool unit **(200)** of the third variation may include, on the inlet or outlet side of the supercool heat exchanger **(210)** in the supercool refrigerant circuit **(220),** a flow rate sensor (not shown) as a flow rate detecting means, wherein the operation of the supercool compressor **(221)** is controlled based on the flow rate detected by the flow rate sensor. The detected flow rate indicates the flow rate of supercool refrigerant flowing through the supercool heat exchanger **(210)** which is the state of supercool refrigerant.

In the supercool unit **(200),** a value detected by the flow rate sensor and a value detected by the outside air temperature sensor **(231)** are fed to the controller **(240).** With the aid of a previously prepared estimation curve (not shown), the controller **(240)** estimates the electrical energy of the outdoor unit **(11)** from the value detected by the flow rate sensor as well as from the value detected by the outside air temperature sensor **(231).** For example, if the value detected by the flow rate sensor is small, it is decided that the flow rate of refrigerant of the refrigerant circuit **(20)** in the supercool heat exchanger **(210)** is likewise small, and there is made an estimate that power consumption relating to the refrigerant circuit **(20)** is small. On the other hand, if the value detected by the flow rate sensor is large, it is decided that the flow rate of refrigerant of the refrigerant circuit (20) in the supercool heat exchanger **(210)** is likewise large, and there is made an estimate that power consumption relating to the refrigerant circuit **(20)** is large.

FOURTH VARIATION

The supercool unit **(200)** of the fourth variation may include a pressure sensor (not shown) which is a pressure detecting means for detecting the high pressure of supercool refrigerant in the supercool refrigerant circuit **(220),** wherein the operation of the supercool compressor **(221)** is controlled based on the pressure detected by the pressure sensor. The detected pressure indicates the state of supercool refrigerant.

In the supercool unit **(200),** a value detected by the pressure sensor and a value detected by the outside air temperature sensor **(231)** are fed to the controller **(240).** With the aid of a previously prepared estimation curve (not shown), the controller **(240)** estimates the electrical energy of the outdoor unit **(11)** from the value detected by the pressure sensor as well as from the value detected by the outside air temperature sensor (231). For example, if the value detected by the pressure sensor is small, it is decided that the flow rate of supercool refrigerant in the supercool outdoor heat exchanger **(222)** and the flow rate of supercool refrigerant in the supercool heat exchanger **(210)** are both low and, in addition, it is decided that the flow rate of refrigerant of the refrigerant circuit **(20)** in the supercool heat exchanger **(210)** is also low. This therefore yields an estimate that power consumption relating to the refrigerant circuit **(20)** is small. On the other hand, if the value detected by the pressure sensor is large, it is decided that the flow rate of supercool refrigerant in the supercool outdoor heat exchanger **(222)** and the flow rate of supercool refrigerant in the supercool heat exchanger **(210)** are both high and, in addition, it is decided that the flow rate of refrigerant of the refrigerant circuit **(20)** in the supercool heat exchanger **(210)** is also high. This therefore yields an estimate that power consumption relating to the refrigerant circuit **(20)** is large.

FIFTH VARIATION

The supercool unit **(200)** of the fifth variation may include two different pressure sensors (not shown) as pressure detecting means one of which is to detect the high pressure of supercool refrigerant in the supercool refrigerant circuit **(220)** and the other of which is to detect the low pressure of supercool refrigerant in the supercool refrigerant circuit **(220),** wherein the operation of the supercool compressor **(221)** is controlled based on the difference between the pressure detected by the one pressure sensor and the pressure detected by the other pressure sensor. To sum up, this difference between the detected pressures indicates the state of supercool refrigerant.

In the supercool unit **(200),** values detected by the pressure sensors and a value detected by the outside air temperature sensor **(231)** are fed to the controller **(240).** With the aid of a previously prepared estimation curve (not shown), the controller **(240)** estimates the electrical energy of the outdoor unit **(11)** from the difference between the values detected by the pressure sensors as well as from the value detected by the outside air temperature sensor **(231).** For example, if the difference between the values detected by the pressure sensors is small, it is decided that, since the low pressure level is held substantially constant by degree-of-opening control of the supercool expansion valve **(223),** the high pressure level is lower than normal and, in addition, it is decided that the flow rate of refrigerant of the refrigerant circuit **(20)** in the supercool heat exchanger **(210)** is low, as described above. This therefore yields an estimate that power consumption relating to the refrigerant circuit **(20)** is small. On the other hand, if the difference between the values detected by the pressure sensors is large, it is decided that the high pressure level is higher than normal and, in addition, it is decided that the flow rate of refrigerant of the refrigerant circuit **(20)** in the supercool heat exchanger **(210)** is also high. This therefore yields an estimate that power consumption relating to the refrigerant circuit **(20)** is large.

SECOND EMBODIMENT OF THE INVENTION

Instead of reducing the power consumption of the supercool compressor **(221)** by directly stopping the supercool compressor **(221)** as in the first embodiment, the operating frequency of the outdoor fan **(230)** of the supercool outdoor heat exchanger **(222)** is increased to thereby reduce the power consumption of the supercool compressor **(221)** in the refrigerating apparatus **(10)** of the second embodiment. In other words, in the present embodiment, the operating frequency of the supercool compressor **(221)** is held constant.

More specifically, when the degree of supercooling of the refrigerant of the refrigerant circuit **(20)** is large, it is estimated that power consumption relating to the refrigerant circuit **(20)** is small, and the operating frequency of the outdoor fan **(230)** is not changed by the controller **(240).** On the other hand, when the degree of supercooling is small, it is estimated that power consumption relating to the refrigerant circuit **(20)** is large, and the controller **(240)** controls the operating frequency of the outdoor fan **(230)** to increase so that the volume of air sent by the outdoor fan **(230)** increases. Hereby, the high pressure of supercool refrigerant in the supercool refrigerant circuit **(220)** decreases. In other words, the discharge pressure of the supercool compressor **(221)** decreases. Consequently, the amount of compression work decreases in the supercool compressor **(221),** thereby reducing the power consumption. As a result of this, it becomes possible to control the operation of the supercool compressor **(221)** depending on the operational status of the refrigerant circuit **(20),** without the transferring of signals with the refrigerant circuit **(20),** thereby making it possible to hold the sum of the electrical energy of the outdoor unit **(11)** and the electrical energy of the supercool compressor **(221)** below the limit value.

If, in the present embodiment, the operating frequency of the outdoor fan **(230)** is increased, this results in an increase in the power consumption of the outdoor fan **(230).** However, relative to such an increase in the power consumption of the outdoor fan **(230),** the power consumption in the supercool compressor **(221)** is considerably reduced, thereby making it possible to reduce the power consumption of the supercool unit **(200)** without failing. In addition, if it is estimated that the power consumption in the refrigerant circuit **(20)** in each of the variations of the first embodiment is large, then the operation of the outdoor fan **(230)** is controlled, as in the above.

THIRD EMBODIMENT OF THE INVENTION

Unlike the first embodiment in which the cooling fluid circuit is formed by a refrigerant circuit through which supercool refrigerant is circulated, the cooling fluid circuit in the refrigerating apparatus **(10)** of the third embodiment is formed by a cooling water circuit through which cooling water flows, which is not shown diagrammatically. More specifically, this cooling water circuit includes, in addition to the supercool heat exchanger **(210),** a pump, wherein cooling water held in a cooling tower is delivered by the pump to the supercool heat exchanger **(210).** Then, in the supercool heat exchanger **(210),** the cooling water exchanges heat with refrigerant in the refrigerant path **(205),** as a result of which the refrigerant is cooled. To sum up, in the cooling fluid circuit of the present embodiment, cooling water flows as a cooling fluid.

In this case, the controller **(240)** regulates the operating capacity of the pump based on the degree of supercooling of the refrigerant in the refrigerating apparatus **(10)** as well as based on the temperature of outside air. More specifically, when the degree of supercooling is large, the operating frequency of the pump is not changed by the controller **(240).** On the other hand, when the degree of supercooling is small, the controller **(240)** controls the operating frequency of the pump to decrease to thereby reduce the operating capacity of the pump. Hereby, the power consumption of the pump can be reduced. As a result of this, it becomes possible to control the operation of the pump depending on the operational status of the refrigerant circuit **(20),** without the transferring of signals with the refrigerant circuit **(20),** thereby making it possible to control the overall electrical energy of the refrigerating apparatus **(10)** to fall below the limit value.

FOURTH EMBODIMENT OF THE INVENTION

Instead of suppressing the overall electrical energy of the refrigerating apparatus **(10)** by reducing the power consumption of the supercool compressor **(221)** for limiting the power consumption of the supercool unit **(200)** as in the first embodiment, the power consumption of the supercool unit **(200)** in the refrigerating apparatus **(10)** of the fourth embodiment is preferentially increased when the load increases in order that the overall power consumption of the refrigerating apparatus **(10)** may be suppressed.

More specifically, an outside air temperature *Ta* which is a value detected by the outside air temperature sensor **(231)** and a liquid refrigerant outlet temperature *Tout* which is a value detected by the outlet side refrigerant temperature sensor **(237)** are fed to the controller **(240)** of the present embodiment. Then, based on the outside air temperature *Ta,* the controller **(240)** decides whether the operation of the supercool compressor **(221)** is continued or stopped. In other words, in the present embodiment, the outside air temperature *Ta* is used as the ambient condition of the supercool heat exchanger **(210).**

In the following, how the controller **(240)** provides control is described.

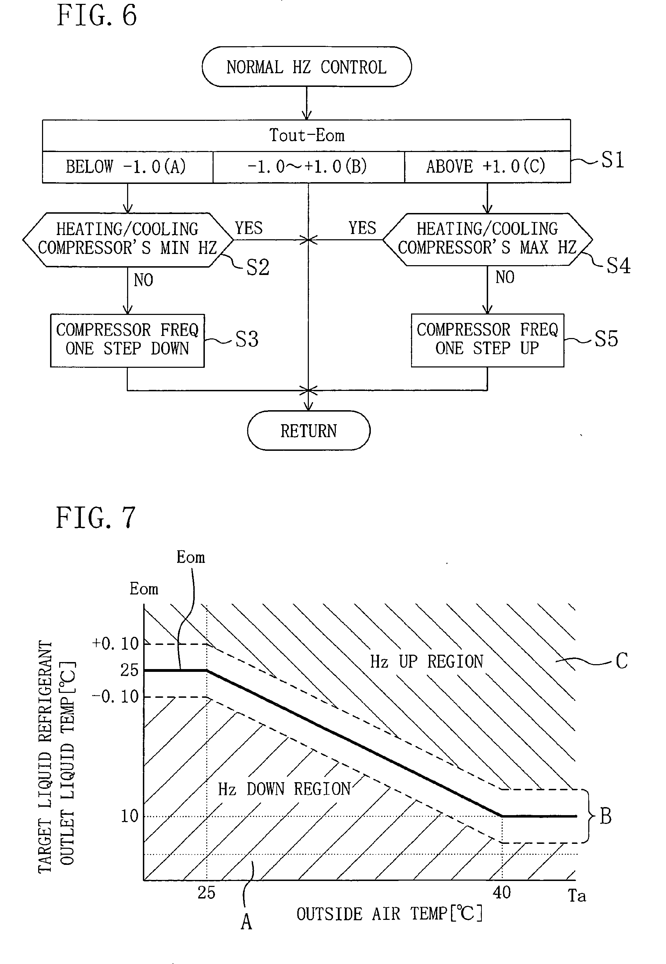

As shown in Figure 6, a target liquid refrigerant outlet temperature *Eom* as a previously prepared target value is set. Based on the target liquid refrigerant outlet temperature *Eom,* the controller **(240)** controls the operating capacity of the supercool compressor **(221)**. This target liquid refrigerant outlet temperature *Eom* is set, such that it decreases as the outside air temperature *Ta* increases.

More specifically, if the outside air temperature *Ta* is: 25° C ≤ *Ta* ≤ 40° C, the target liquid refrigerant outlet temperature *Eom* is set as follows:

$$Eom = -(Ta - 40) + 10° \text{ C}$$

In addition, if *Ta* < 25° C, *Eom*=25° C (constant). If *Ta* > 40° *C, Eom* = 10° C (constant).

In the following, how the controller **(240)** controls the operating capacity of the supercool compressor **(221)** is described with reference to Figure 7.

The frequency of the supercool compressor **(221)** is at a predetermined frequency value. At step S 1, the controller **(240)** calculates a difference (*Tout - Eom)* between the liquid refrigerant outlet temperature *Tout* and the target liquid refrigerant outlet temperature *Eom.* If the calculated difference is below - 1.0° C (region A of Figure 7), the control procedure proceeds to step S2. On the other hand, if the calculated difference is -1.0° C or above, but below 1.0° C (region B of Figure 7), the control procedure is over. Further, if the calculated difference is above -1.0° C (region C of Figure 7), the control procedure proceeds to step S4.

At step S2, the controller **(240)** decides whether or not the frequency of the supercool compressor **(221)** is at the minimum frequency. If so (i.e. the supercool compressor **(221)** is at the minimum frequency), the control procedure is over, otherwise the control procedure proceeds to step S3.

At step S3, the frequency of the supercool compressor **(221)** is reduced by a predetermined one step. Then, the control procedure is over.

On the other hand, at step S4, whether the frequency of the supercool compressor **(221)** is at the maximum frequency is decided. If so (i.e. the supercool compressor **(221)** is at the maximum frequency), the control procedure is over, otherwise the control procedure proceeds to step S5.

At step S5, the frequency of the supercool compressor **(221)** is increased by a predetermined one step. Then, the control procedure is over.

The controller **(240)** performs the above routine for every 30 seconds.

As descried above, as the outside air temperature *Ta* increases, the target liquid refrigerant outlet temperature *Eom* is set lower by the controller **(240)**. In order to bring the liquid refrigerant outlet temperature *Tout* to approach the target liquid refrigerant outlet temperature *Eom* lower than *Tout,* it is required that the operating frequency of the supercool compressor **(221)** be increased to thereby increase the operating capacity of the supercool compressor **(221)** to a further extent. To this end, in the present embodiment, the controller **(240)** regulates the target liquid refrigerant outlet temperature *Eom* when the load of the refrigerating apparatus **(10)** increases due to a rise in the outside air temperature *Ta,* whereby the operating capacity of the supercool compressor **(221)** is preferentially increased. As a result, the power consumption of the supercool compressor **(221)** increases, and the power consumption of the supercool refrigerant circuit **(220)** is preferentially increased.

In the supercool unit **(200)** of the present embodiment, it is arranged such that, when the liquid refrigerant outlet temperature *Tout* differs from the target liquid refrigerant outlet temperature *Eom* by 1.0° C or more, the operating capacity of the supercool compressor **(221)** is changed by the controller **(240).** Alternatively, the operating capacity of the supercool compressor **(221)** may be changed when *Tout* differs from *Eom* by ± 1.5° C or by ± 2.0° C.

EFFECTS OF THE FOURTH EMBODIMENT

As described above, the evaporating temperature of supercool refrigerant in the supercool heat exchanger **(210)** is higher than the evaporating temperature of refrigerant in the utilization side heat exchangers **(101, 111, 131)**. The high-low pressure difference in the refrigeration cycle in the supercool refrigerant circuit **(220)** is smaller than the high-low pressure difference of the refrigeration cycle in the refrigerant circuit **(20).** And in the refrigerating apparatus **(10)** of the present embodiment, the operating frequency of the supercool compressor **(221)** is increased to preferentially increase its power consumption (the amount of work) so that not the amount of refrigerant circulation in the refrigerant circuit **(20)** having a greater high-low pressure difference in the refrigeration cycle, but the amount of supercool refrigerant circulation in the supercool refrigerant circuit **(220)** having a smaller high-low pressure difference in the refrigerant cycle is increased. In other words, the operating capacity of the supercool compressor **(221)** whose load is originally small is preferentially increased to cope with the increase in load. Because of this, it becomes possible to suppress the increase in input power necessary for dealing with the increase in load, thereby preventing a drop in the coefficient of performance. As a result, the increase in the overall power consumption of the refrigerating apparatus **(10)** can be suppressed.

In addition, in the present embodiment, as the outside air temperature increases, the operating capacity of the supercool compressor **(221)** is increased in preference to the heat source side compressors **(41, 42, 43).** This makes it possible to preferentially increase the operating capacity of the supercool compressor **(221)** to the variation in high-low pressure difference depending on the outside air temperature, whereby the drop in the COP of the refrigerating apparatus **(10)** is easily and effectively suppressed. Consequently, the amount of increase in the overall power consumption is suppressed.

VARIATIONS OF THE FOURTH EMBODIMENT

In each of first to sixth variations of the fourth embodiment, as the ambient condition of the supercool heat exchanger **(210),** the target value of the temperature of refrigerant at the outlet of the supercool heat exchanger **(210)** is set based on various parameters other than the outside air temperature.

FIRST VARIATION

In the refrigerating apparatus **(10)** of the first variation, the degree of supercooling of the refrigerant of the refrigerant circuit **(20)** flowing through the supercool heat exchanger **(210)** is used as the ambient condition of the supercool heat exchanger **(210).** In this case, temperature sensors as refrigerant temperature detecting means (not shown) are disposed in the refrigerant path **(205),** being respectively located on the inlet side and on the outlet side of the supercool heat exchanger **(210).** Temperatures detected by these temperature sensors are fed to the controller **(240),** wherein the difference between the detected temperatures is used as a degree of supercooling. And in the controller **(240),** the target liquid refrigerant outlet temperature *Eom* is set based on the degree of supercooling of the refrigerant. In other words, the load is estimated to have increased with the decrease of the degree of supercooling, and the target liquid refrigerant outlet temperature *Eom* is so set as to become lower.

SECOND VARIATION

In the refrigerating apparatus **(10)** of the second variation, the flow rate of the refrigerant of the refrigerant circuit **(20)** flowing through the supercool heat exchanger **(210)** is used as the ambient condition of the supercool heat exchanger **(210).** In this case, a flow rate sensor (not shown) as a refrigerant flow rate detecting means is disposed in the refrigerant path **(205),** and a refrigerant flow rate detected by the flow rate sensor is fed to the controller **(240).** And in the controller **(240),** the target liquid refrigerant outlet temperature *Eom* is set based on the refrigerant flow rate. In other words, the load is estimated to have increased with the increase of the refrigerant flow rate, and the target liquid refrigerant outlet temperature *Eom* is so set as to become lower.

THIRD VARIATION

In the refrigerating apparatus **(10)** of the third variation, the difference between temperatures of the supercool refrigerant prior to and after supercooling in the supercool heat exchanger **(210)** is used as the ambient condition of the supercool heat exchanger **(210).** In this case, temperature sensors (not shown) as supercool refrigerant temperature detecting means are disposed, respectively, on the inlet side and on the outlet side of the supercool heat exchanger **(210).** Temperatures detected by these temperature sensors are fed to the controller **(240),** wherein the difference between the detected temperatures is used as a temperature difference between temperatures of the supercool refrigerant prior to and after supercooling. And in the controller **(240),** the target liquid refrigerant outlet temperature *Eom* is set based on the supercool refrigerant temperature difference. In other words, the load is estimated to have increased with the decrease of the temperature difference, and the target liquid refrigerant outlet temperature *Eom* is so set as to become lower.

FOURTH VARIATION

In the refrigerating apparatus **(10)** of the fourth variation, the flow rate of supercool refrigerant flowing through the supercool heat exchanger **(210)** is used as the ambient condition of the supercool heat exchanger **(210).** In this case, a flow rate sensor (not shown) as a supercool refrigerant flow rate detecting means is disposed either on the inlet side or the outlet side of the supercool heat exchanger **(210),** and a flow rate detected by the flow rate sensor is fed to the controller **(240).** And in the controller **(240),** the target liquid refrigerant outlet temperature *Eom* is set based on the detected flow rate. In other words, the load is estimated to have increased with the increase of the supercool refrigerant flow rate, and the target liquid refrigerant outlet temperature *Eom* is so set as to become lower.

FIFTH VARIATION

In the refrigerating apparatus **(10)** of the fifth variation, the high pressure of supercool refrigerant in the supercool refrigerant circuit **(220)** is used as the ambient condition of the supercool heat exchanger **(210).** In this case, a pressure sensor (not shown) as a pressure detecting means is disposed on the discharge side of the supercool compressor **(221),** and a pressure detected by the pressure sensor is fed to the controller **(240).** And in the controller **(240),** the target liquid refrigerant outlet temperature $Eom$ is set based on the detected pressure. In other words, the load is estimated to have increased with the increase of the supercool refrigerant high pressure, and the target liquid refrigerant outlet temperature $Eom$ is so set as to become lower.

SIXTH VARIATION

In the refrigerating apparatus **(10)** of the sixth variation, the pressure difference between the high pressure and the low pressure of supercool refrigerant in the supercool refrigerant circuit **(220)** is used as the ambient condition of the supercool heat exchanger **(210).** In this case, pressure sensors (not shown) as pressure detecting means are disposed, respectively on the discharge side and on the suction side of the supercool compressor **(221),** and pressures detected by the pressure sensors are fed to the controller **(240).** And in the controller **(240),** the target liquid refrigerant outlet temperature $Eom$ is set based on the difference between the detected pressures. In other words, the load is estimated to have increased with the increase of the pressure difference, and the target liquid refrigerant outlet temperature $Eom$ is so set as to become lower.

FIFTH EMBODIMENT

Unlike the fourth embodiment in which the operating frequency of the supercool compressor **(221)** is directly increased to thereby increase the power consumption of the supercool compressor **(221),** in the refrigerating apparatus **(10)** of the fifth embodiment the power consumption of the supercool refrigerant circuit **(220)** is increased by increasing the operating frequency of the outdoor fan **(230)** of the supercool outdoor heat exchanger **(222).** In other words, in the present embodiment, the operating frequency of the supercool compressor **(221)** remains unchanged even when the load increases.

More specifically, when the operating frequency of the outdoor fan **(230)** is increased, the flow rate of supercool refrigerant in the supercool heat exchanger **(210)** increases. As a result there is an increase in cooling capacity. Stated another way, when the operating frequency of the outdoor fan **(230)** is increased, the high pressure of supercool refrigerant in the supercool refrigerant circuit **(220)** decreases and the supercool compressor **(221)** is improved in volumetric efficiency, thereby increasing the amount of refrigerant circulation. Accordingly, the liquid refrigerant outlet temperature $Tout$ drops. As a result the power consumption of the outdoor fan **(230)** increases, and the power consumption of the supercool refrigerant circuit **(220)** is preferentially increased.

Additionally in the present embodiment the supercool compressor **(221)** is improved in operating efficiency. As a result the power consumption of the supercool compressor **(221)** is reduced. However, the amount of increase in the power consumption of the outdoor fan **(230)** is considerably large and the overall power consumption of the supercool unit **(200)** increases without failing.

For the case of the present embodiment, the control procedure of the controller **(240)** is as follows. At step S2 of Figure 6, the controller **(240)** decides whether the frequency of the outdoor fan **(230)** is at the minimum frequency. If so, then the control procedure is over. If not so, the control procedure proceeds to step S3. At step S3, the frequency of the outdoor fan **(230)** is lowered by a predetermined one step and the control procedure is over.

On the other hand, at step S4, whether the frequency of the outdoor fan **(230)** is at the maximum frequency is decided. If so, the control procedure is over. If not so, the control procedure proceeds to step S5. At step S5, the frequency of the supercool compressor **(221)** is increased by a predetermined one step and the control procedure is over. The controller **(240)** performs such a routine for every 30 seconds.

As described above, when the load of the refrigerating apparatus **(10)** increases due to a rise in the outside air temperature $Ta,$ the controller **(240)** regulates the target liquid refrigerant outlet temperature $Eom$ so that the operating capacity of the outdoor fan **(230)** is preferentially increased. As a result, the power consumption of the supercool refrigerant circuit **(220)** is preferentially increased, and the amount of increase in the overall power consumption of the refrigerating apparatus **(10)** is suppressed. Other constructions, operations, and working effects are the same as the fourth embodiment.

SIXTH EMBODIMENT

Unlike the first embodiment in which the cooling fluid circuit is formed by a refrigerant circuit through which supercool refrigerant is circulated, the cooling fluid circuit in the refrigerating apparatus **(10)** of the sixth embodiment is formed by a cooling water circuit through which cooling water flows, which is not shown diagrammatically. More specifically, this cooling water circuit includes, in addition to the supercool heat exchanger **(210),** a pump, wherein cooling water held in a cooling tower is delivered by the pump to the supercool heat exchanger **(210).** Then, in the supercool heat exchanger **(210),** the cooling water exchanges heat with refrigerant in the refrigerant path **(205),** as a result of which the refrigerant is cooled. To sum up, in the cooling fluid circuit of the present embodiment, cooling water flows as a cooling fluid.

In this case, when the load of the refrigerating apparatus (10) increases, the controller (240) controls the operating capacity of the pump to increase so that the liquid refrigerant outlet temperature *Tout* becomes the target liquid refrigerant outlet temperature *Eom.* As a result, the power consumption of the pump increases and power consumption relating to the cooling water circuit is preferentially increased, whereby the amount of increase in the overall power consumption of the refrigerating apparatus (10) is suppressed. Other constructions, operations, and working effects are the same as the fourth embodiment.

The aforesaid embodiments and their variations are essentially preferable examples, it therefore being understood that they are not intended to limit the present invention, its application or its applicability.

## INDUSTRIAL APPLICABILITY

As has been described above, the present invention is useful for refrigerating apparatuses configured to supercool refrigerant in a supercool heat exchanger.

## Claims

1. A refrigerating apparatus comprising: a refrigerant circuit (20) which includes a utilization side heat exchanger (101, 111, 131) and a heat source side compressor (41, 42, 43) and through which refrigerant is circulated to effect a vapor compression refrigeration cycle; and a cooling fluid circuit (220) which includes a supercool heat exchanger (210) and a pump mechanism (221) which delivers cooling fluid to the supercool heat exchanger (210), wherein refrigerant which is supplied to the utilization side heat exchanger (101, 111, 131) is supercooled by cooling fluid in the supercool heat exchanger (210), the refrigerating apparatus further comprising control means (240) which reduces the power consumption of the pump mechanism (221) either based on the state of refrigerant of the refrigerant circuit (20) flowing through the supercool heat exchanger (210) or based on the state of cooling fluid of the cooling fluid circuit (220) and the temperature of outside air.

2. The refrigerating apparatus of claim 1, wherein:

   the control means (240) is configured to estimate power consumption relating to the refrigerant circuit (20) either based on the state of refrigerant of the refrigerant circuit (20) flowing through the supercool heat exchanger (210) or based on the state of cooling fluid of the cooling fluid circuit (220) and the temperature of outside air, whereby the power consumption of the pump mechanism (221) is reduced.

3. The refrigerating apparatus of claim 1, wherein:

   the cooling fluid circuit is a supercool refrigerant circuit (220) which includes a supercool compressor (221) as a pump mechanism and a heat source side heat exchanger (222) and through which supercool refrigerant as cooling fluid is circulated to effect a vapor compression refrigeration cycle, and
   the control means (240) is configured to reduce the power consumption of the supercool compressor (221) by lowering the operating frequency of the supercool compressor (221) either based on the state of refrigerant of the refrigerant circuit (20) flowing through the supercool heat exchanger (210) or based on the state of supercool refrigerant of the supercool refrigerant circuit (220) and the temperature of outside air.

4. The refrigerating apparatus of claim 1, wherein:

   the cooling fluid circuit is a supercool refrigerant circuit (220) which includes a supercool compressor (221) as a pump mechanism and a heat source side heat exchanger (222) and through which supercool refrigerant as cooling fluid is circulated to effect a vapor compression refrigeration cycle, and
   the control means (240) is configured to reduce the power consumption of the supercool compressor (221) by increasing the operating frequency of a fan (230) of the heat source side heat exchanger (222) either based on the state of refrigerant of the refrigerant circuit (20) flowing through the supercool heat exchanger (210) or based on the state of supercool refrigerant of the supercool refrigerant circuit (220) and the temperature of outside air.

5. The refrigerating apparatus of claim 1 or claim 2, wherein:

   the state of refrigerant of the refrigerant circuit (20) flowing through the supercool heat exchanger (210) is the degree of supercooling of refrigerant of the refrigerant circuit (20) in the supercool heat exchanger (210).

6. The refrigerating apparatus of claim 1 or claim 2, wherein:

   the state of refrigerant of the refrigerant circuit (20) flowing through the supercool heat exchanger (210) is the flow rate of refrigerant of the refrigerant circuit (20) flowing through the supercool heat exchanger (210).

**7.** The refrigerating apparatus of claim 1 or claim 2, wherein:

the state of cooling fluid of the cooling fluid circuit **(220)** is the difference between temperatures of cooling fluid prior to and after supercooling of refrigerant of the refrigerant circuit **(20)** in the supercool heat exchanger **(210).**

**8.** The refrigerating apparatus of claim 1 or claim 2, wherein:

the state of cooling fluid of the cooling fluid circuit **(220)** is the flow rate of cooling fluid flowing through the supercool heat exchanger **(210).**

**9.** The refrigerating apparatus of claim 1 or claim 2, wherein:

the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle, and
the state of supercool refrigerant of the supercool refrigerant circuit **(220)** is the high pressure of supercool refrigerant in the supercool refrigerant circuit **(220).**

**10.** The refrigerating apparatus of claim 1 or claim 2, wherein:

the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle, and
the state of supercool refrigerant of the supercool refrigerant circuit **(220)** is the pressure difference between the high pressure and the low pressure of supercool refrigerant in the supercool refrigerant circuit **(220).**

**11.** A refrigerating apparatus comprising: a refrigerant circuit **(20)** which includes a utilization side heat exchanger **(101, 111, 131)** and a heat source side compressor **(41, 42, 43)** and through which refrigerant is circulated to effect a vapor compression refrigeration cycle; and a cooling fluid circuit **(220)** which includes a supercool heat exchanger **(210)** and a pump mechanism **(221)** which delivers cooling fluid to the supercool heat exchanger **(210),** wherein refrigerant which is supplied to the utilization side heat exchanger **(101, 111, 131)** is supercooled by cooling fluid in the supercool heat exchanger **(210),**
the refrigerant apparatus further comprising control means **(240)** which controls power consumption relating to the refrigerant circuit **(20)** and power consumption relating to the cooling fluid circuit **(220),** and
the control means **(240)** increasing the power consumption of the cooling fluid circuit **(220)** in preference to the refrigerant circuit **(20),** when there is an increase in load.

**12.** The refrigerating apparatus of claim 11, wherein:

the control means **(240)** is configured to control power consumption relating to the cooling fluid circuit **(220)** so that the temperature of refrigerant at an outlet of the supercool heat exchanger **(210)** becomes a target value, and to set the target value based on the ambient condition of the supercool heat exchanger **(210)** so that the power consumption of the cooling fluid circuit **(220)** is preferentially increased when there is an increase in load.

**13.** The refrigerating apparatus of claim 11, wherein:

the control means **(240)** is configured to increase the power consumption of the pump mechanism **(221)** to thereby preferentially increase the power consumption of the cooling fluid circuit **(220).**

**14.** The refrigerating apparatus of claim 13, wherein:

the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle, and
the control means **(240)** is configured to increase the operating frequency of the supercool compressor **(221)** to thereby increase the power consumption of the supercool compressor **(221).**

**15.** The refrigerating apparatus of claim 11, wherein:

the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle, and
the control means **(240)** is configured to increase the operating frequency of a fan **(230)** of the heat source side heat exchanger **(222)** to thereby preferentially increase the power consumption of the supercool refrigerant circuit **(220).**

16. The refrigerating apparatus of claim 12, wherein:

the ambient condition of the supercool heat exchanger **(210)** is the temperature of outside air.

17. The refrigerating apparatus of claim 12, wherein:

the ambient condition of the supercool heat exchanger **(210)** is the degree of supercooling of refrigerant of the refrigerant circuit **(20)** in the supercool heat exchanger **(210).**

18. The refrigerating apparatus of claim 12, wherein:

the ambient condition of the supercool heat exchanger **(210)** is the flow rate of refrigerant of the refrigerant circuit **(20)** flowing through the supercool heat exchanger **(210).**

19. The refrigerating apparatus of claim 12, wherein:

the ambient condition of the supercool heat exchanger **(210)** is the difference between temperatures of cooling fluid of the cooling fluid circuit **(220)** prior to and after supercooling of refrigerant of the refrigerant circuit **(20)** in the supercool heat exchanger **(210).**

20. The refrigerating apparatus of claim 12, wherein:

the ambient condition of the supercool heat exchanger **(210)** is the flow rate of cooling fluid of the cooling fluid circuit **(220)** flowing through the supercool heat exchanger **(210).**

21. The refrigerating apparatus of claim 12, wherein:

the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle, and
the ambient condition of the supercool heat exchanger **(210)** is the high pressure of supercool refrigerant in the supercool refrigerant circuit **(220).**

22. The refrigerating apparatus of claim 12, wherein:

the cooling fluid circuit is a supercool refrigerant circuit **(220)** which includes a supercool compressor **(221)** as a pump mechanism and a heat source side heat exchanger **(222)** and through which supercool refrigerant as cooling fluid is circulated to effect a vapor compression refrigeration cycle, and
the ambient condition of the supercool heat exchanger **(210)** is the pressure difference between the high pressure and the low pressure of supercool refrigerant in the supercool refrigerant circuit **(220).**

23. The refrigerating apparatus of claim 16, wherein:

the control means **(240)** is configured to decrease the target value as the temperature of outside air increases.

# FIG. 1

EP 1 775 528 A1

FIG. 2

FIG. 3

EP 1 775 528 A1

# FIG. 4

ELECTRICAL ENERGY
OF OUTDOOR UNIT

SMALL

DEGREE OF
SUPERCOOLING

LARGE

LIQUID REFRIGERANT
CIRCULATION AMOUNT

# FIG. 5

ELECTRICAL ENERGY
OF OUTDOOR UNIT

LARGE

OUTSIDE AIR TEMP

SMALL

LIQUID REFRIGERANT
CIRCULATION AMOUNT

# FIG. 6

```
        ┌─────────────────────┐
        │  NORMAL HZ CONTROL  │
        └─────────────────────┘
                   │
                   ▼
┌──────────────────────────────────────────────────────────┐
│                        Tout-Eom                            │
├──────────────────┬──────────────────┬─────────────────────┤
│  BELOW -1.0(A)   │  -1.0～+1.0(B)   │  ABOVE +1.0(C)      │  ～S1
└──────────────────┴──────────────────┴─────────────────────┘
```

```
HEATING/COOLING          YES    YES    HEATING/COOLING
COMPRESSOR'S MIN HZ ─────────┼────────── COMPRESSOR'S MAX HZ
        │  ～S2                                  │  ～S4
        │ NO                                     │ NO
        ▼                                        ▼
COMPRESSOR FREQ  ～S3              COMPRESSOR FREQ  ～S5
ONE STEP DOWN                     ONE STEP UP
```

```
        ┌──────────┐
        │  RETURN  │
        └──────────┘
```

# FIG. 7

## INTERNATIONAL SEARCH REPORT

| | International application No. |
|---|---|
| | PCT/JP2005/014122 |

**A. CLASSIFICATION OF SUBJECT MATTER**
*F25B1/00* (2006.01)

According to International Patent Classification (IPC) or to both national classification and IPC

**B. FIELDS SEARCHED**

Minimum documentation searched (classification system followed by classification symbols)
*F25B1/00* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 8-28984 A (Toshiba Corp.), 02 February, 1996 (02.02.96), Par. Nos. [0016] to [0022], [0064] to [0065]; Figs. 1, 6 to 8 (Family: none) | 1-11,13-15 |
| Y | JP 2000-274789 A (Mitsubishi Electric Corp.), 06 October, 2000 (06.10.00), Par. Nos. [0041], [0050]; Fig. 2 (Family: none) | 1-11,13-15 |
| Y | JP 9-89392 A (Daikin Industries, Ltd.), 04 April, 1997 (04.04.97), Par. No. [0029] (Family: none) | 4,15 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 October, 2005 (27.10.05) | 08 November, 2005 (08.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 775 528 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10185333 A